(19) Europäisches Patentamt
European Patent Office
Office européen des brevets

(11) EP 2 031 526 A2

(12) EUROPEAN PATENT APPLICATION

(43) Date of publication:
04.03.2009 Bulletin 2009/10

(51) Int Cl.:
*G06F 17/50* (2006.01)

(21) Application number: 08158903.8

(22) Date of filing: 24.06.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 30.08.2007 JP 2007224887
21.03.2008 JP 2008073598

(71) Applicant: Fujitsu Limited
Kawasaki-shi, Kanagawa 211-8588 (JP)

(72) Inventors:
• Demizu, Kouji
Kawasaki-shi, Kanagawa 211-8588 (JP)
• Kidera, Masayuki
Kawasaki-shi, Kanagawa 211-8588 (JP)

(74) Representative: Holtby, Christopher Lawrence
Haseltine Lake
5th Floor, Lincoln House
300 High Holborn
London WC1V 7JH (GB)

(54) **Binding management apparatus, method and program**

(57) The passing point management unit (104) stores the attribute of each passing point of harness and the like in a virtual design space in a passing point table as passing point information and manages it. The binding point management unit (105) stores the attribute of a binding point obtained by binding each passing point of harness as binding point information including relationship information of the binding point of each passing point and independent of each piece of passing point information. The management unit (105) collectively edits/displays bound harness and so on by editing the binding point information of the binding point table and reflecting the edition result in the passing point information related to the binding point information based on the relationship information.

FIG. 7

EP 2 031 526 A2

## Description

## Background of the Invention

### Field of the Invention

The present invention relates to a system for designing/verifying equipment in virtual space, and more particularly to the design support technology of flexible string- and belt-shaped objects, such as harness, a metal cable, an optical cable and the like.

### Description of the Related Art

Recently, three-dimensional data for device design has been promoted and product development has been realized in a short time by verifying items which has been verified by producing a prototype, at a design stage using product data in virtual space.

Electronic components disposed inside electronic equipment, between it and another device, inside a building and the like are electrically or optically connected with each other by wire harness, a metal cable, an optical cable and the like. In such a connection wiring of an electrical/optical signal, such as harness, a cable and the like, needs for advance verification at a design stage has been increased.

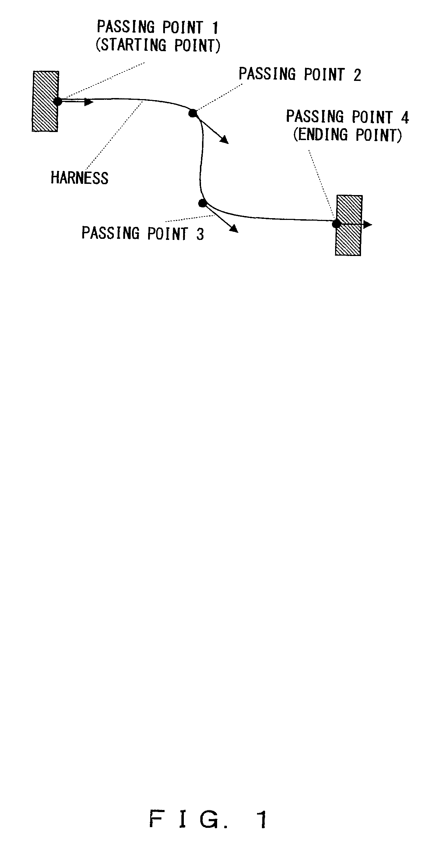

In virtual space a flexible object, such as harness, cable and the like, is expressed, for example, as shown in Fig. 1, by managing a passing point in the virtual space and a passing direction in the point (shown by an arrow mark in Fig. 1) as one set of passing point information, defining the route curve of harness and a cable by the order of these passing points and then shaping them in a string or belt.

In the case of harness, a cable or the like, sometimes its wiring route in a device, between devices or in a building, passes through a route common to other pieces of harness and sometimes it branches in the middle. Although they are separates routes, sometimes they are bound at one point.

In such a case, traditionally each piece if harness can be generated separately. Alternatively, a similar route can be provided by a copy function. Alternatively, either harness or a route which should be a reference can be determined and another piece of harness is generated along it.

For example, when it is desired that four pieces of harness are bound at two points, as shown in Fig. 2, one piece of harness can be copied to three pieces, which can be individually edited, as shown in Fig. 3. Alternatively, as shown in Fig. 4, three pieces of harness 3603 can be generated along reference harness by offsetting and arraying passing points in a direction normal to the connection line against the reference harness 3601 as in harness 3602. Alternatively, as shown in Fig. 5, a reference route 3701 can be generated first and four pieces of harness 3703 can be generated along the reference harness by offsetting and arraying passing points in the direction of the normal to the connection line against the reference harness 3601 as in harness 3602.

The examples of the publicly known references of the present invention are as follows.

Patent Document 1: Japanese Patent No. 2943711
Patent Document 2: Japanese Laid-open Patent Publication No. H8-331734
Patent Document 3: Japanese Patent No. 3562678

However, the above-described prior art has the following problems when modifying a route and so on.

In the method of individually producing each piece of harness, the passing points of targeted harness must be collectively moved and it is difficult to apply an operation to all the passing points without contradiction. Since each piece of harness is generated by an independent calculation method, sometimes in such a route a plurality of pieces of harness overlaps in a section between the passing points due to a modification.

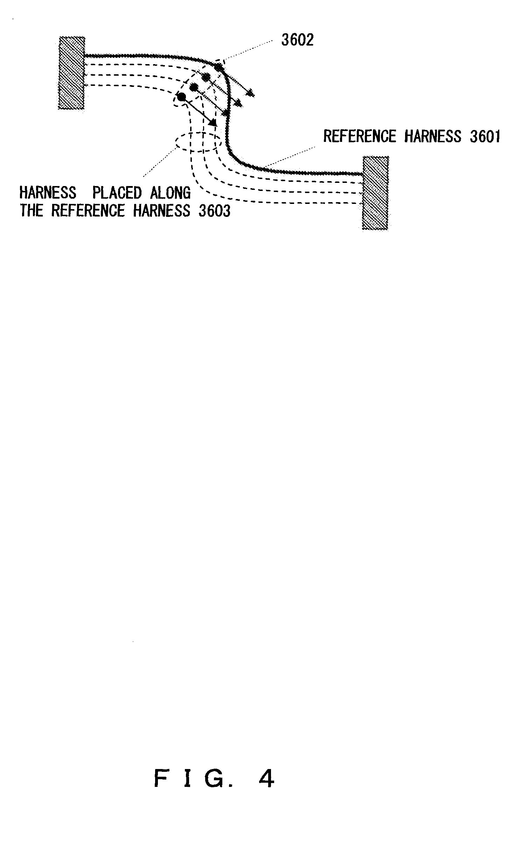

In the method of determining harness being a reference and placing other pieces of harness along it, as shown in Fig. 4, the longest harness of them on a common route must be selected as the reference harness. This is because another piece of harness cannot be placed along beyond the route of the reference harness. However, it is unclear at the design stage of route determination which route becomes the longest route commonly used, care is necessary when producing it and it cannot be easily modified.

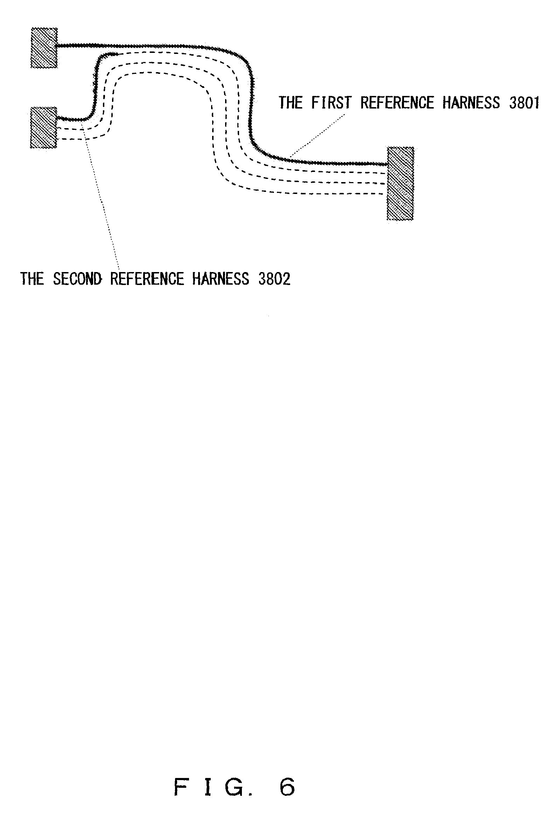

When it is desired to dispose fairly complex harness as shown in Fig. 6, as shown as 3801 and 3802 in Fig. 6, a plurality of pieces of reference harness must be set and a complex operation is necessary.

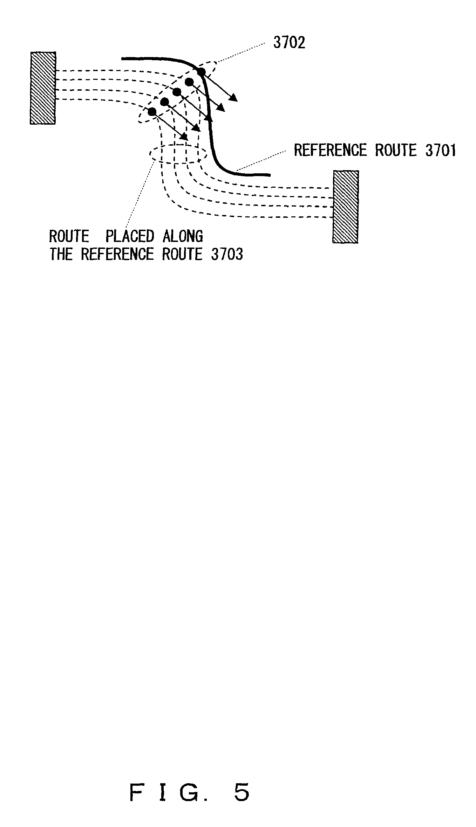

Furthermore, in the method of determining harness being a reference and placing other pieces of harness along it, as shown in Fig. 5, since only a route is set and necessary harness is generated along the reference, the production procedure of only a route becomes necessary and its operation becomes troublesome.

Although disclosing a technology for collectively routing and binding cables, the above-described Patent Documents 1~3 do not disclose a technology for shaping a flexible object based on a binding route and displaying it.

There are naturally the above-described problems not only in harness but also in a metal cable, an optical cable and the like.

### Summary of the Invention

It is desirable to efficiently edit/operate harness and a cable in a binding section without being influenced by reference harness or a reference cable.

Embodiments of the present invention presume an apparatus for supporting the design of the disposition and shape of a flexible object inside a device, between devices or in a building by storing and managing the attribute of each passing point in virtual space of a string- or belt-shaped flexible object, such as harness, a metal cable, an optical cable and the like, as passing point information.

The apparatus is configured as follows.

A binding point information storage unit (105) stores the attribute of a binding point obtained by binding each passing point as binding point information (binding point table) including relationship information indicating the relationship with the passing point information of each passing point and independent of each pieces of passing point information.

A binding point management unit (105-107) collectively manages (edit/display, etc.) the disposition and shapes of a plurality of bound flexible objects by editing the binding point information (a binding point table, a part of a passing point table) stored in the binding point information storage unit (105) and also reflecting the edition result in passing point information related to the binding point information based on the relationship information (a binding point, a binding point number, a binding point U value, a binding point V value, belonging harness and cable, a passing point number, etc.) included in it.

This configuration can further comprise a binding section management unit (106) for enabling the binding point management unit to individually manage each binding section in which the binding state of a flexible object is different using a binding point as a boundary.

The configuration can further comprise a binding section display unit (109b, 109c) for arranging and displaying the bound state of a flexible object for each flexible object and for each binding section.

Furthermore, the configuration can further comprise a passing point management unit (104) for managing (editing/displaying and so on) the disposition and shape of an unbound part by editing the passing point information of a part in which a flexible object is not bound.

In the above-described configuration, the relationship information can include layout information (the binding point U value, the binding point V value) indicating the relative positional relationship between a binding point corresponding to the binding point information included in it and a passing point corresponding to passing point information specified by the relationship information and the binding point management unit can manage the layout of each of a plurality of bound flexible objects based on the layout information.

In this case, the binding point management unit can calculate a binding route (1201) indicating a route of a plurality of bound flexible objects based on the binding point information stored in the binding point information storage unit and also can interpolate the individual route of the bound object from the binding route and calculate it based on the binding route (1202).

According to a configuration embodying the present invention, since in a section where harness and cables are bound, the binding point management unit can collectively move and display bound harness, editing work very easy to use can be realized.

In this case, since the edition result of a bound part can be immediately reflected in each piece of harness or each cable, no contradiction occurs in editing.

Since the binding section management unit can collectively manage sections in which the number of their bound harness and cables differ and in which the minimum curvature radiuses differ, separately, design work with very high freedom can be realized.

The binding section display unit can arrange and display the complex wiring of harness and cables easy to see.

The passing point management unit can do seamless design work using a bound part and unbound part.

By managing layout information about a binding point (binding point position) of a passing point belonging to the binding point, each piece of harness/cable at a binding point can be displayed with high accuracy, the curve of each piece of harness/cable can be calculated with high accuracy based on a binding route and so on.

**Brief Description of the Drawings**

Preferred features of the present invention will now be described purely by way of example, with reference to the accompanying drawings, in which:-

Fig. 1 shows the expression method of a flexible object in virtual space.

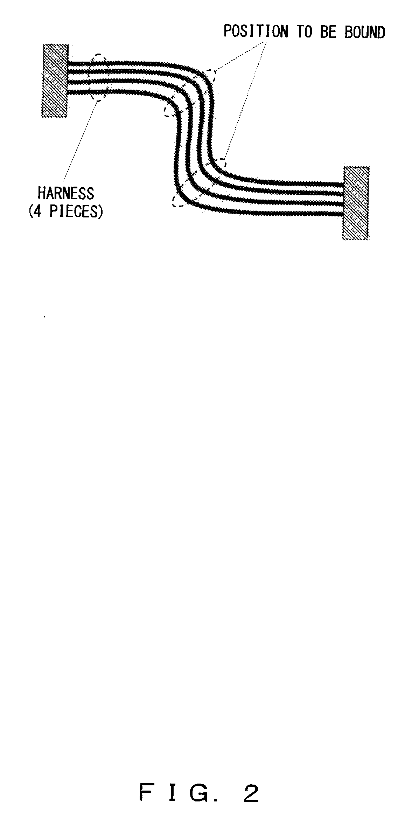

Fig. 2 shows harness to be bound.

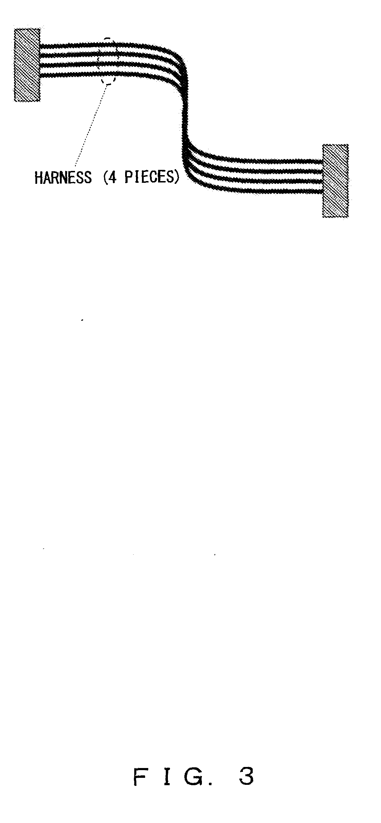

Fig. 3 explains the prior art for binding harness by copying it.
Fig. 4 explains the prior art for binding harness along the reference harness.
Fig. 5 explains the prior art for binding harness along the reference route.
Fig. 6 explains the problems of the prior art for binding harness along the reference harness.

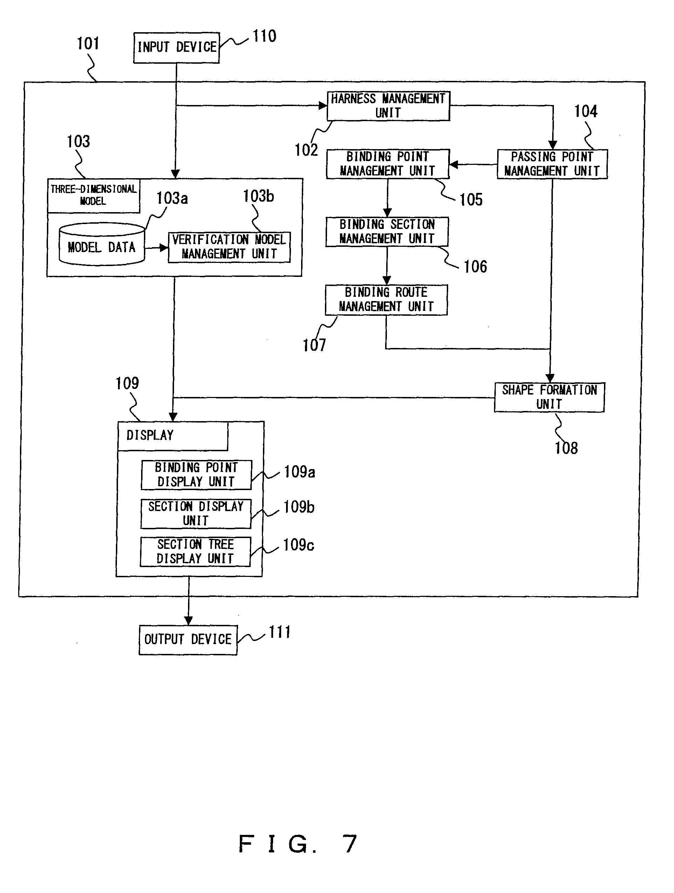

Fig. 7 shows the configuration of the preferred embodiment of a harness design support apparatus according to the present invention.

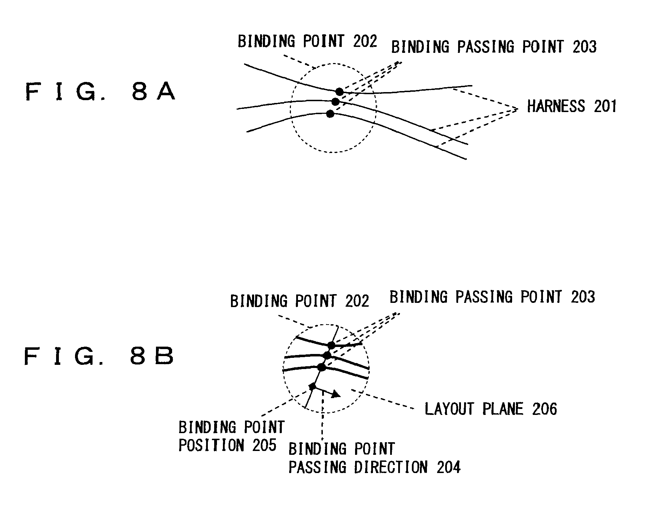

Fig. 8A explains a binding point, a binding passing point, a binding point passing direction and a binding point position (No. 1).
Fig. 8B explains a binding point, a binding passing point, a binding point passing direction and a binding point position (No. 2).

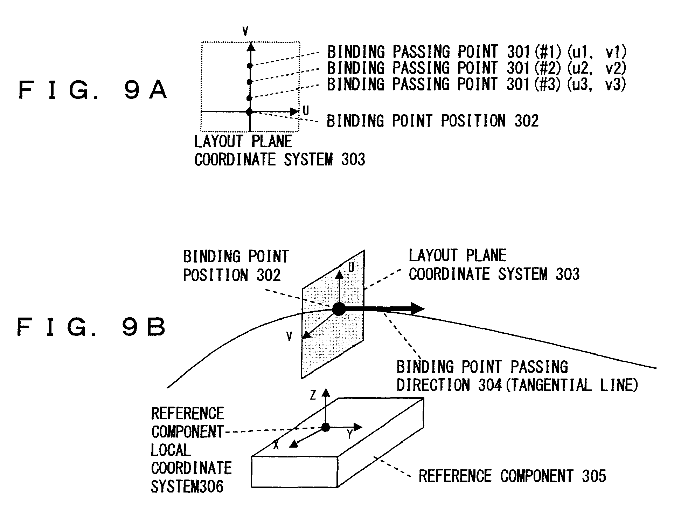

Fig. 9A explains the coordinate system of the binding passing point (No.1).
Fig. 9B explains the coordinate system of a binding passing point (No. 2).

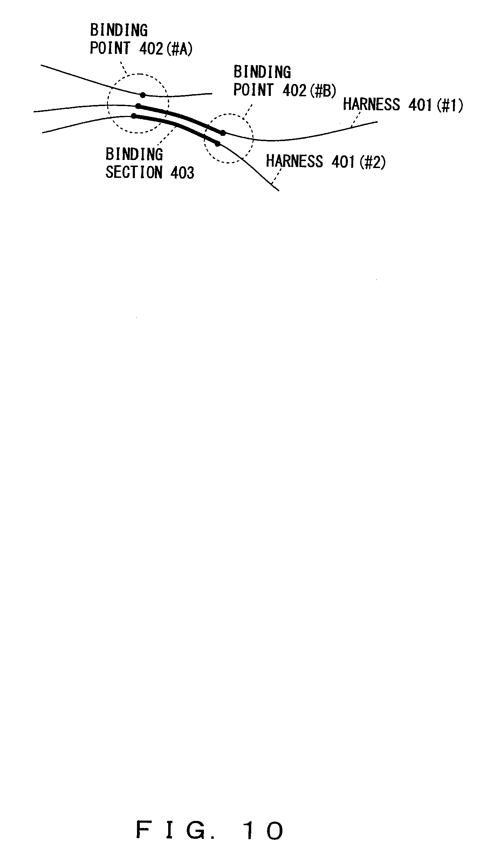

Fig. 10 explains a binding section.

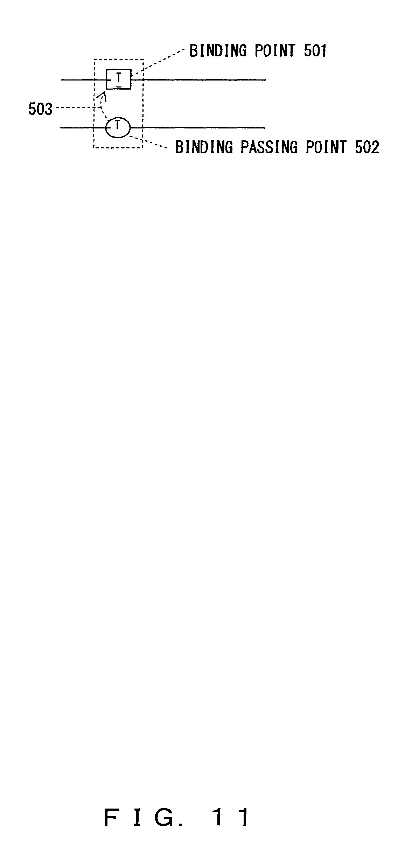

Fig. 11 explains an attribute at the binding passing point.

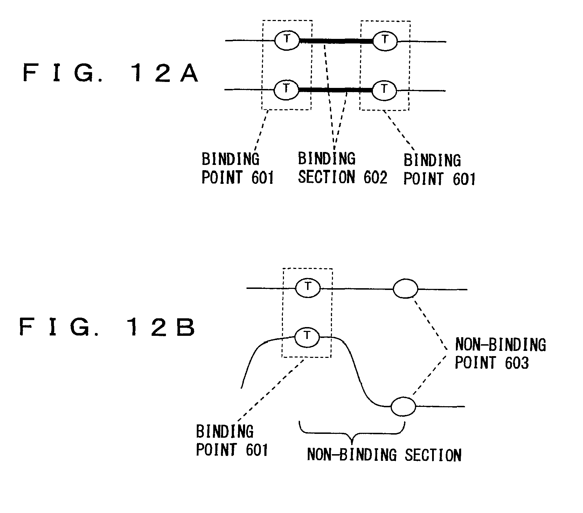

Fig. 12A explains a binding section (No. 1).
Fig. 12B explains a binding section (No. 2).

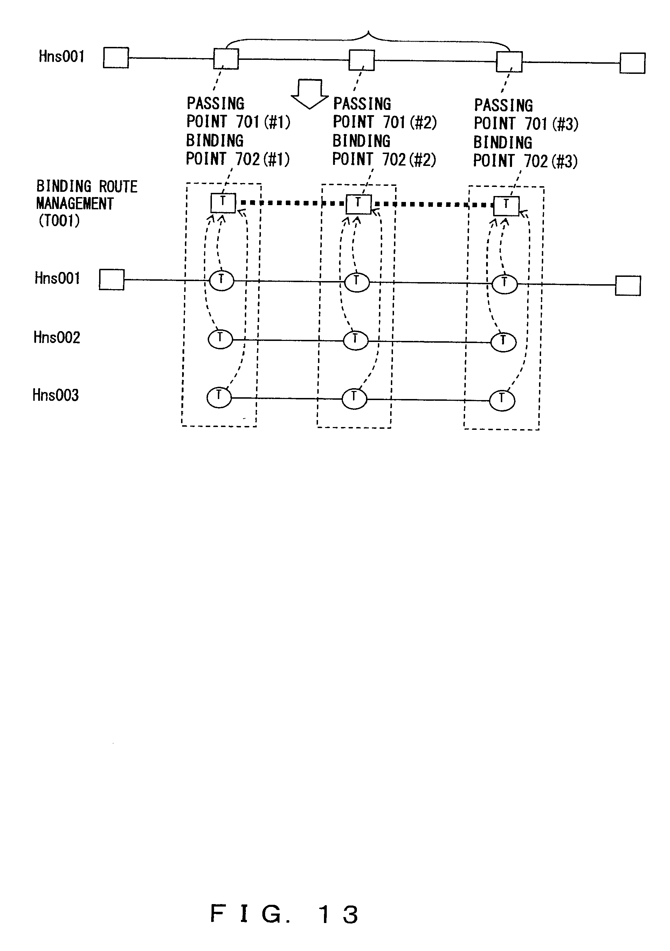

Fig. 13 shows a case where bound harness is generated by referring to existing harness.

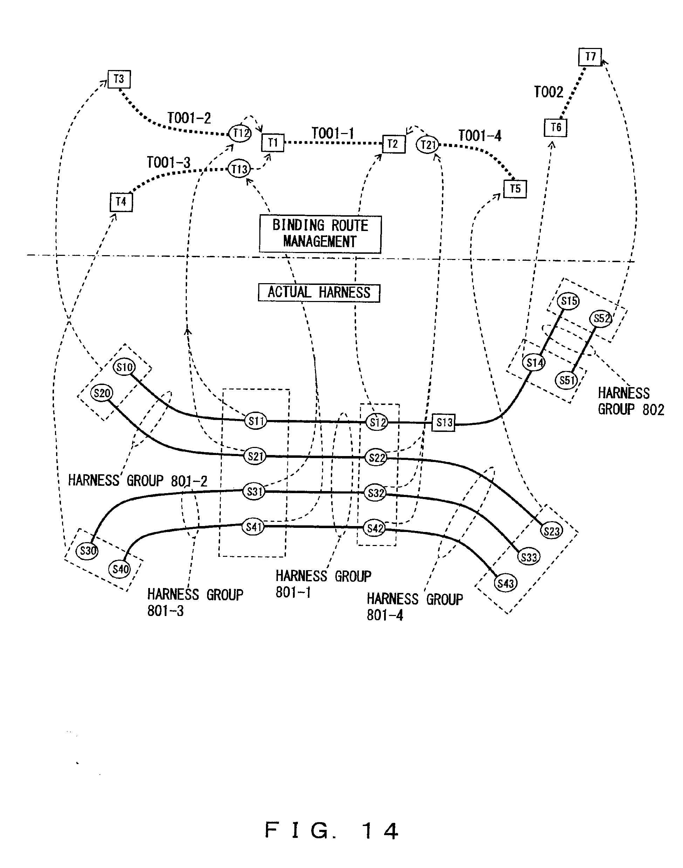

Fig. 14 shows a case where binding route management is branched (No. 1).

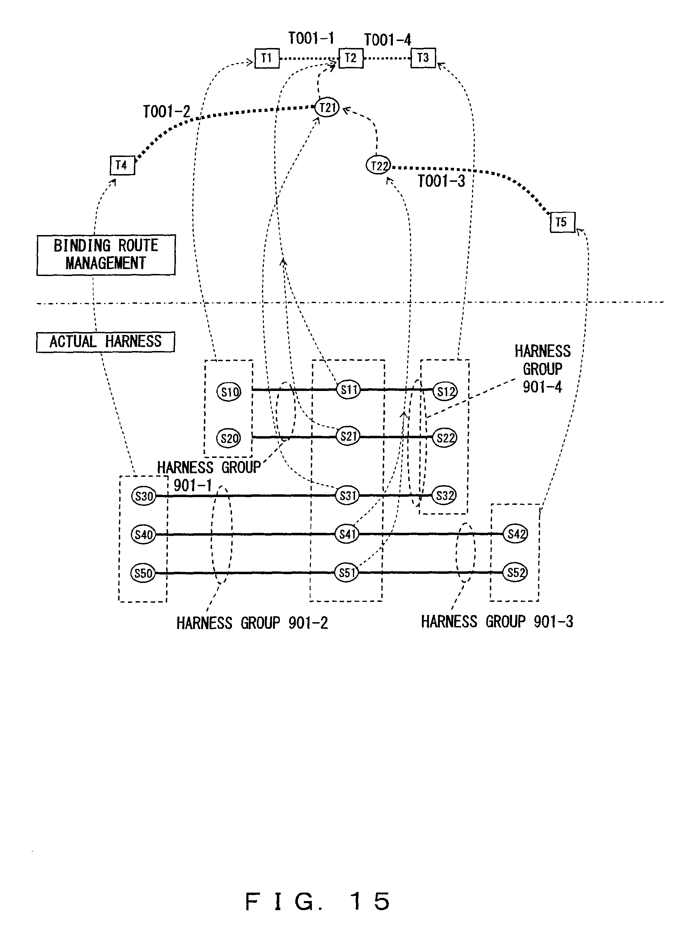

Fig. 15 shows a case where binding route management is branched (No. 2).

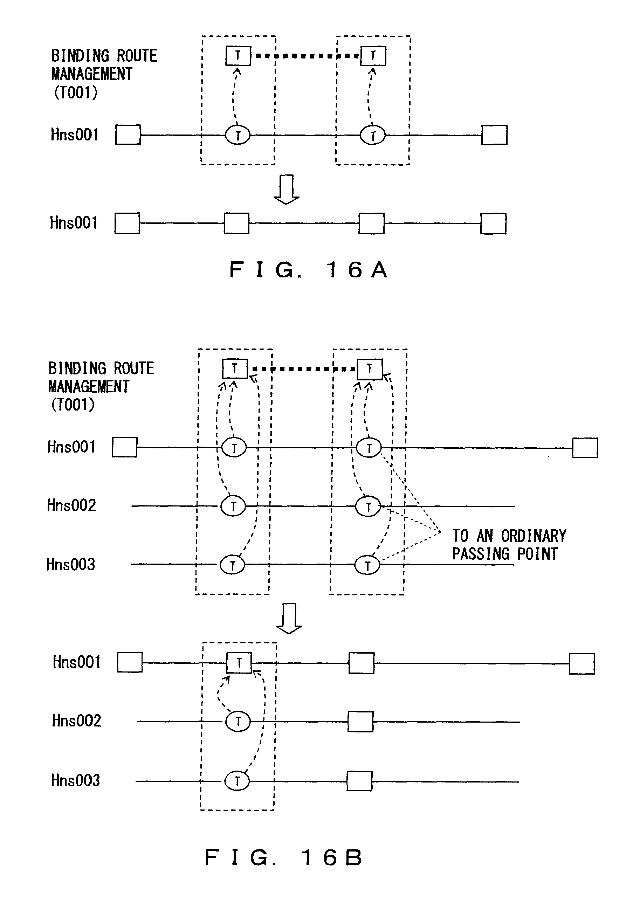

Fig. 16A shows a case where binding route management is deleted (No. 1).

Fig. 16B shows a case where binding route management is deleted (No. 2).

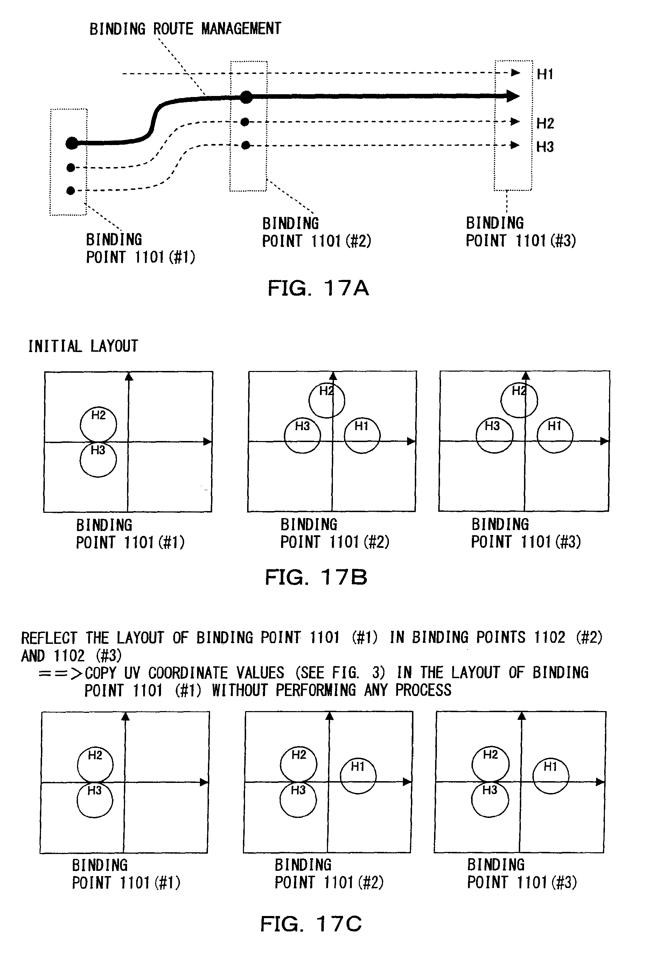

Fig. 17A explains the copying operation of the binding point (No. 1).

Fig. 17B explains the copying operation of the binding point (No. 2).

Fig. 17C explains the copying operation of the binding point (No. 3).

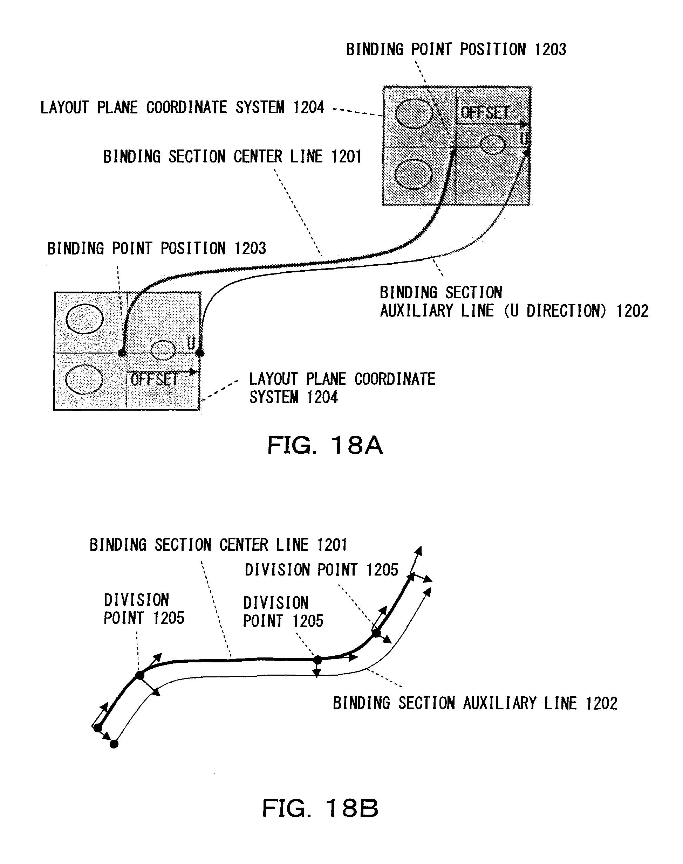

Fig. 18A explains the shaping operation of bound harness (No. 1).

Fig. 18B explains the shaping operation of bound harness (No. 2).

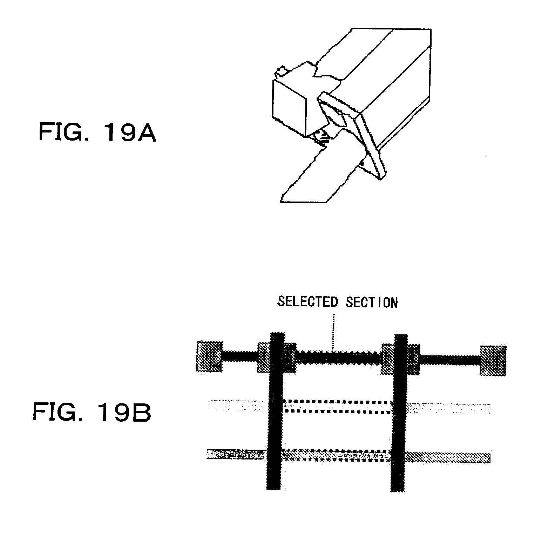

Fig. 19A shows an example of a harness shape (No. 1).

Fig. 19B shows an example of a harness shape (No. 2).

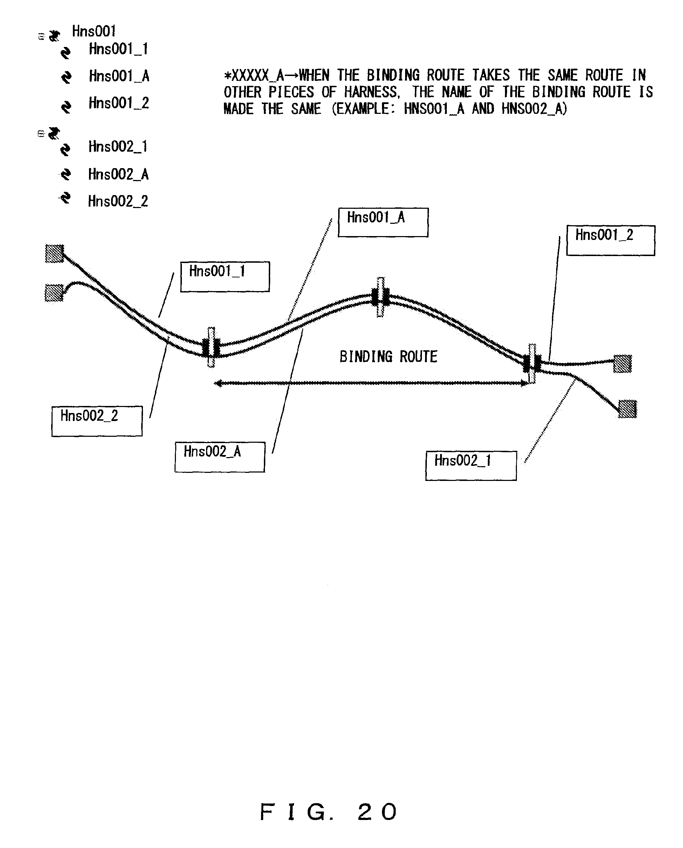

Fig. 20 shows an example of a harness shape (No. 3).

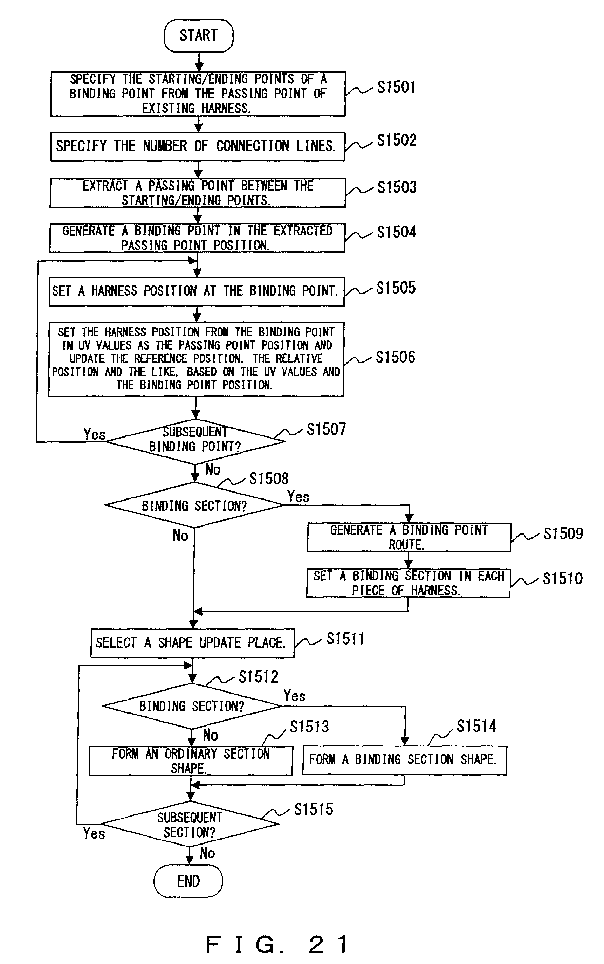

Fig. 21 is an operational flowchart for generating bound harness using existing harness.

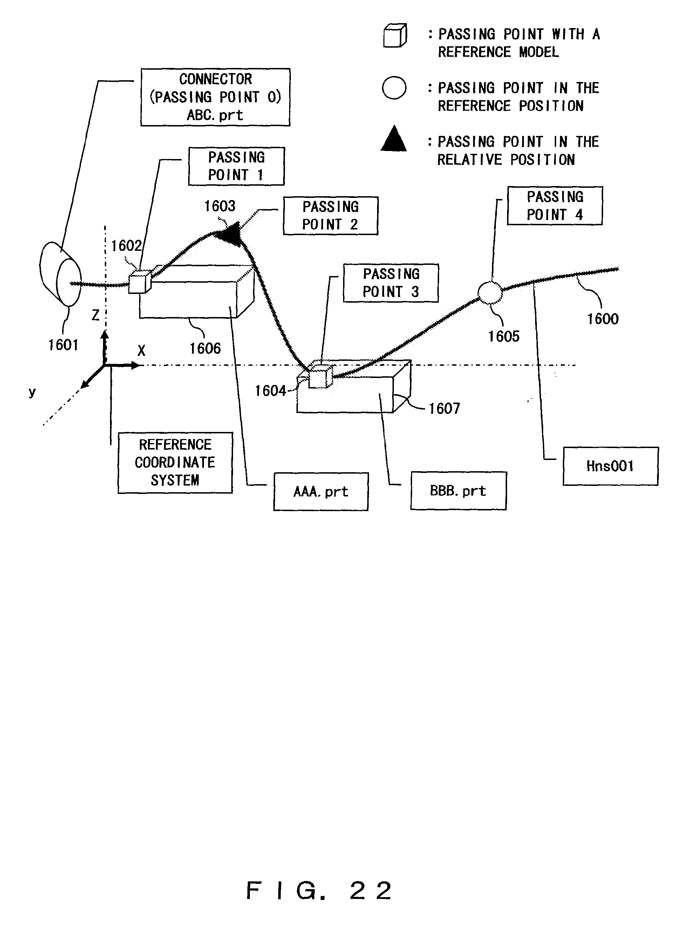

Fig. 22 shows an example of unbound harness and a passing point.

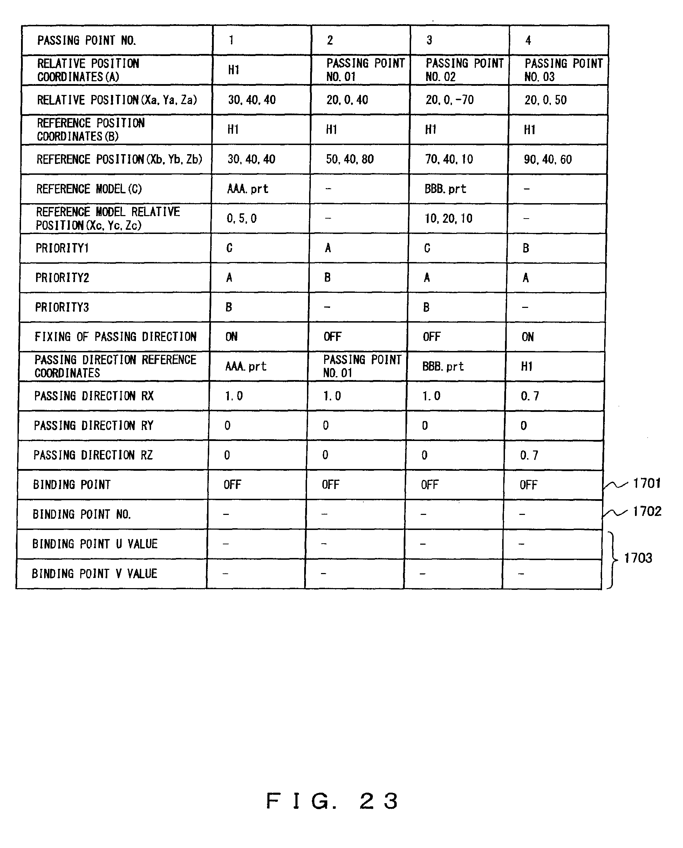

Fig. 23 shows the passing point table of harness Hns001 (No. 1).

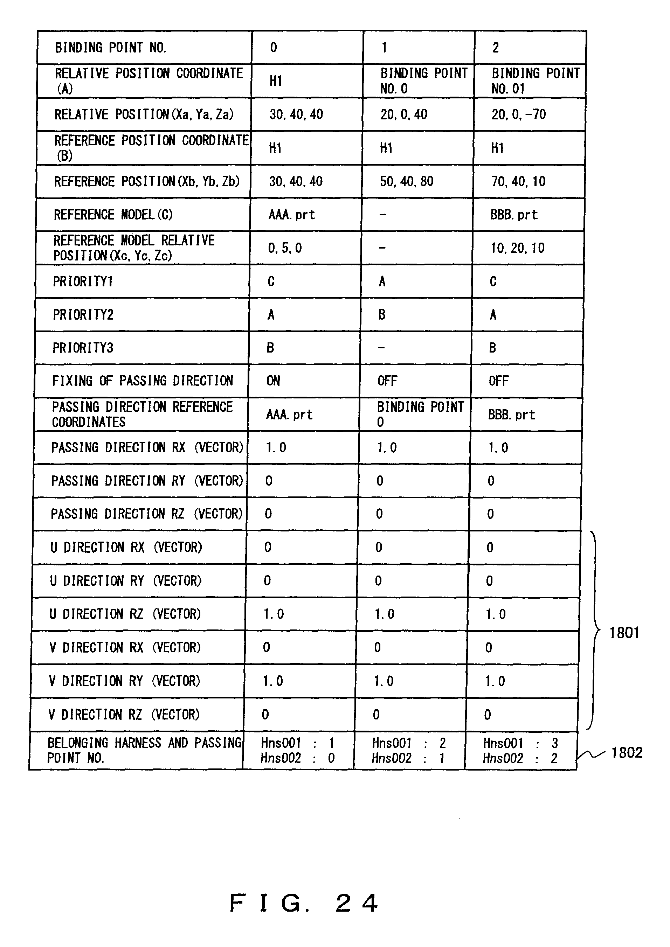

Fig. 24 shows a binding point table (No. 1).

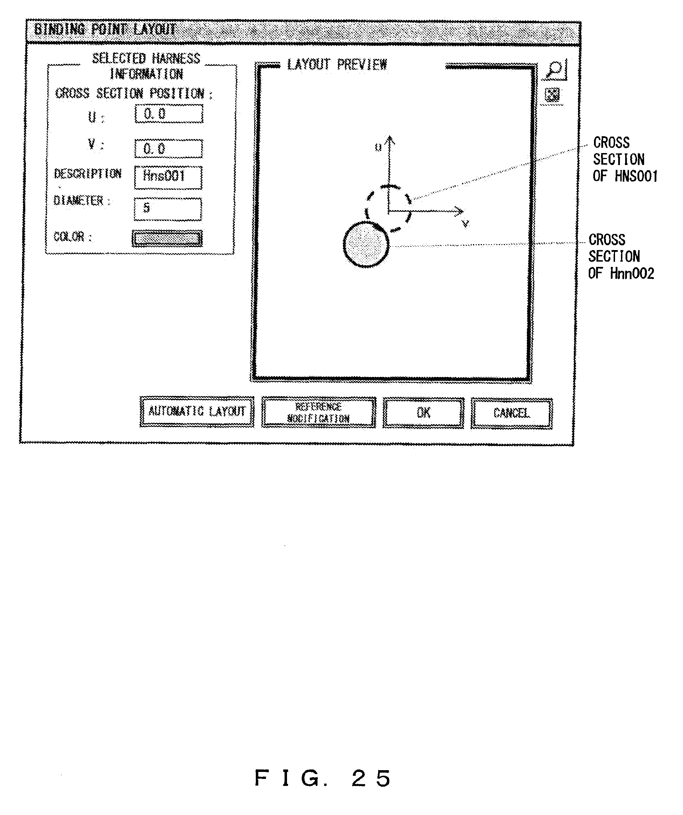

Fig. 25 shows an example of the layout screen of a binding point (No. 1).

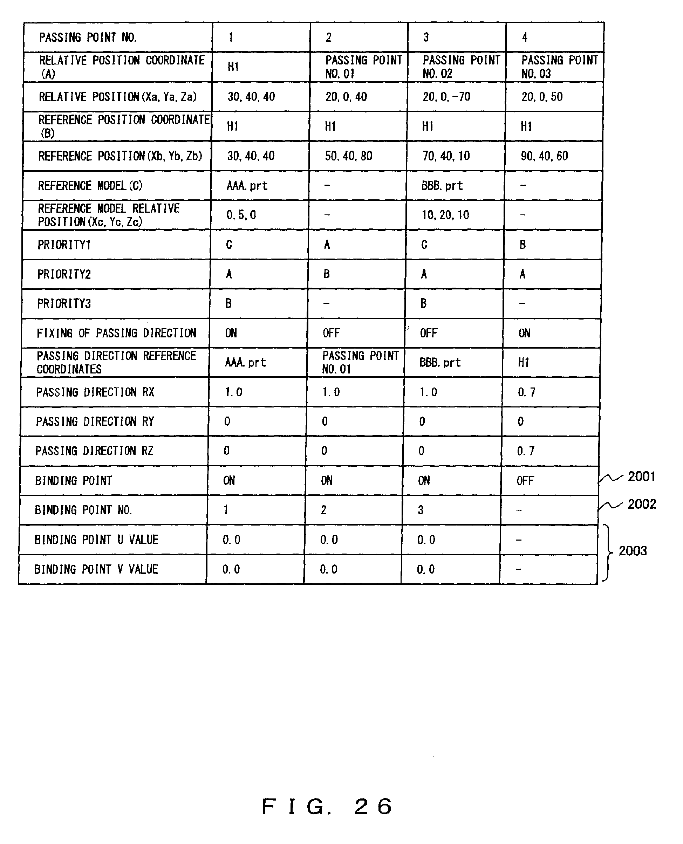

Fig. 26 shows the passing point table of harness Hns001 (No. 2).

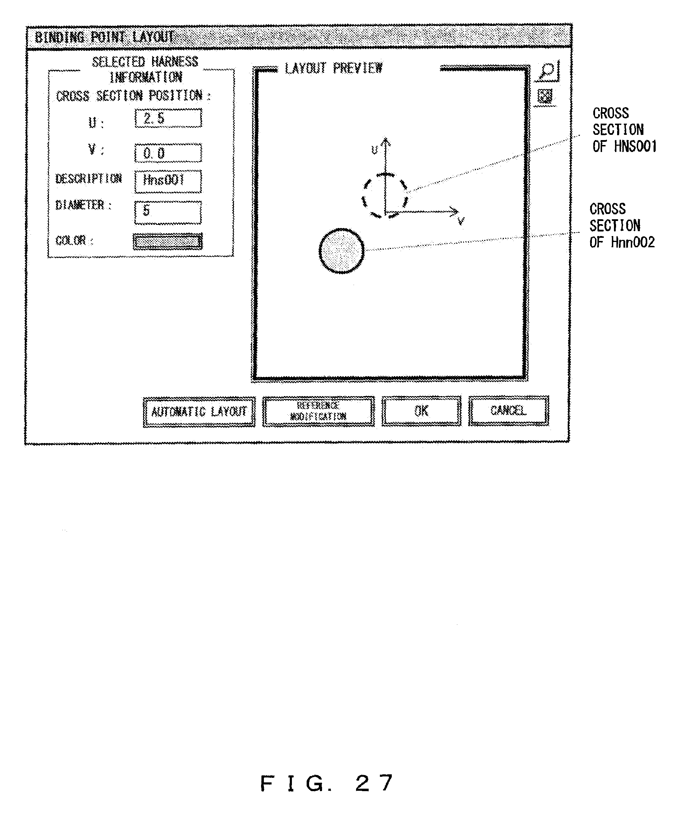

Fig. 27 shows an example of the layout screen of a binding point (No. 2).

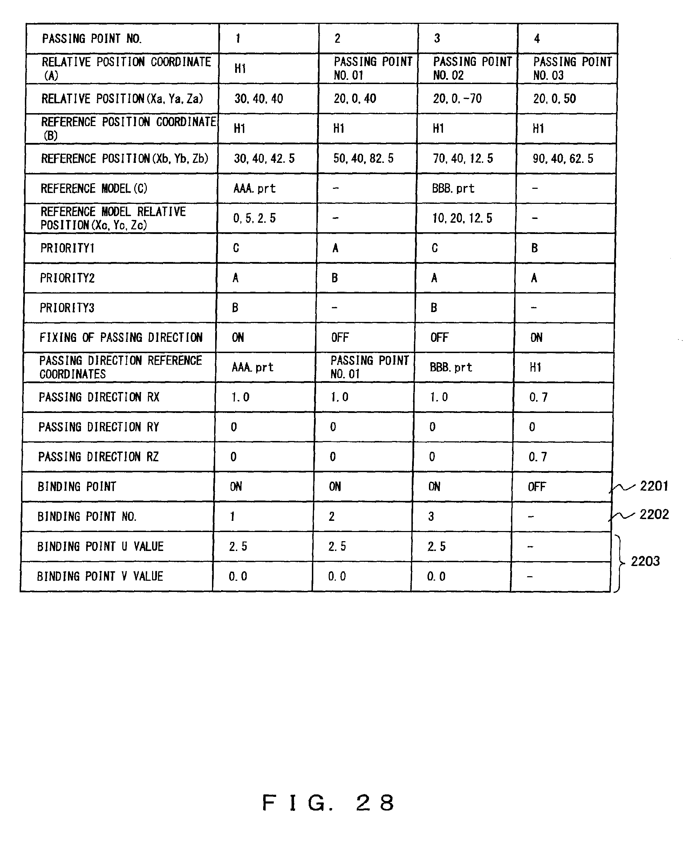

Fig. 28 shows the passing point table of harness Hns001 (No. 3).

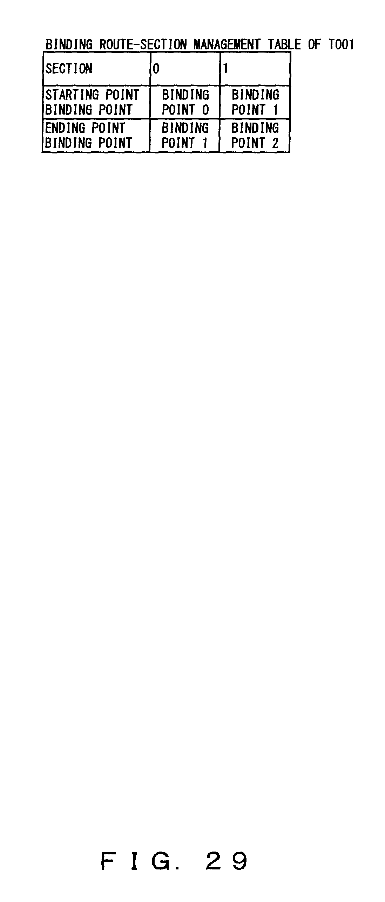

Fig. 29 shows a binding route-section management table.

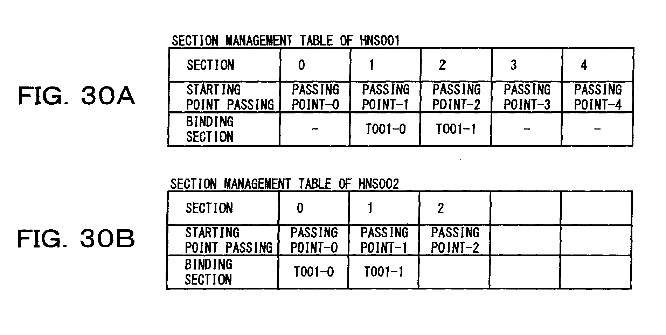

Fig. 30A shows a section management table for each piece of harness (No. 1).

Fig. 30B shows a section management table for each piece of harness (No. 2).

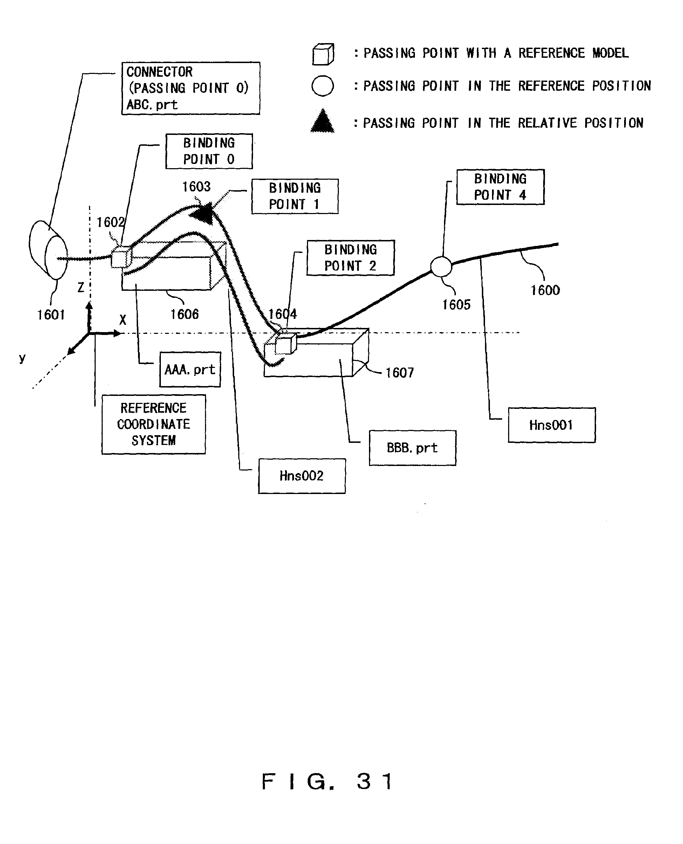

Fig. 31 shows an example of bound harness and a passing point.

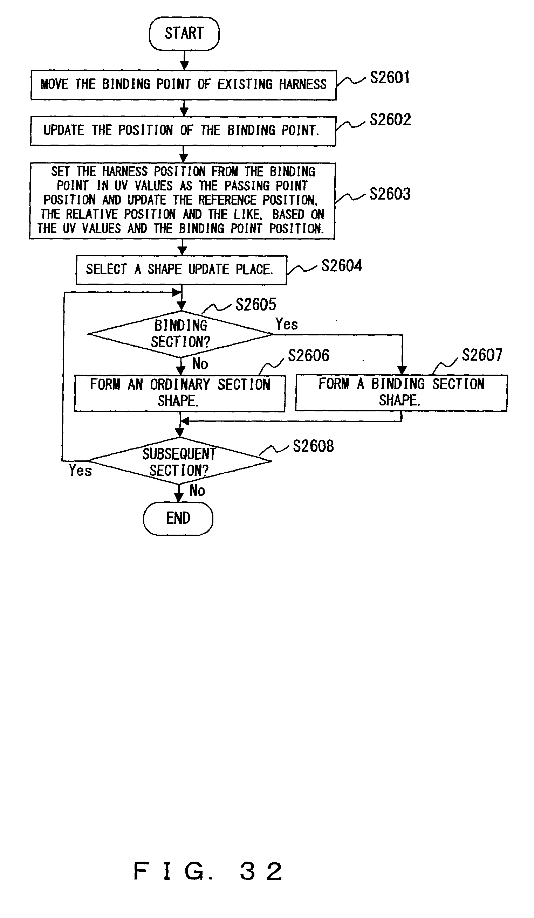

Fig. 32 is an operational flowchart for moving bound harness.

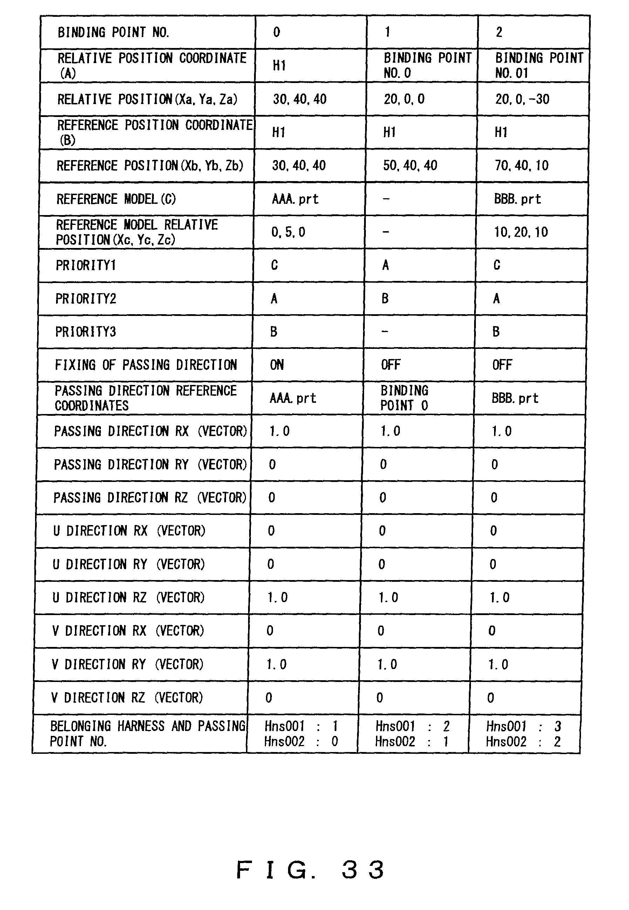

Fig. 33 shows a binding point table (No. 2).

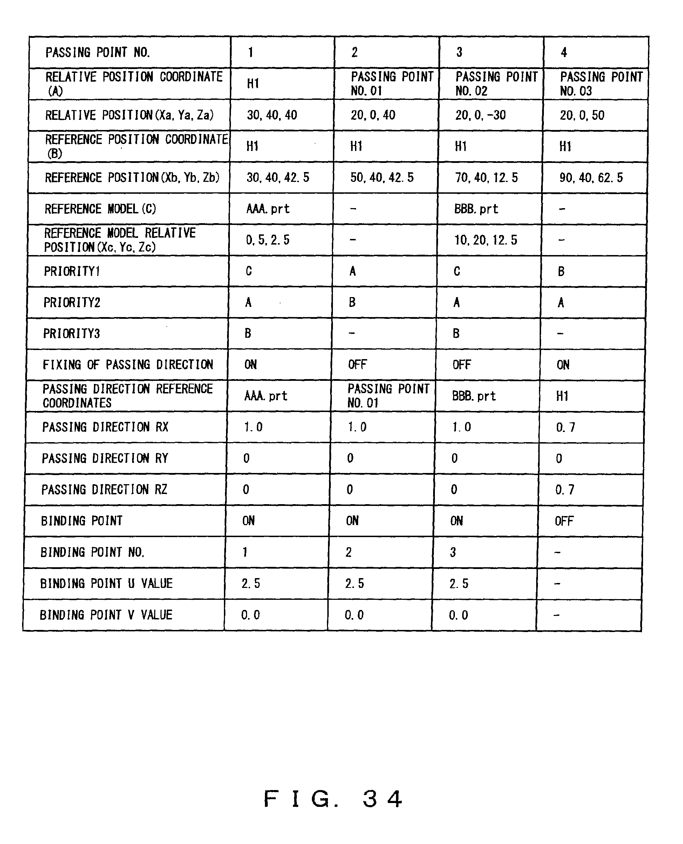

Fig. 34 shows the passing point table of harness Hns001 (No. 4).

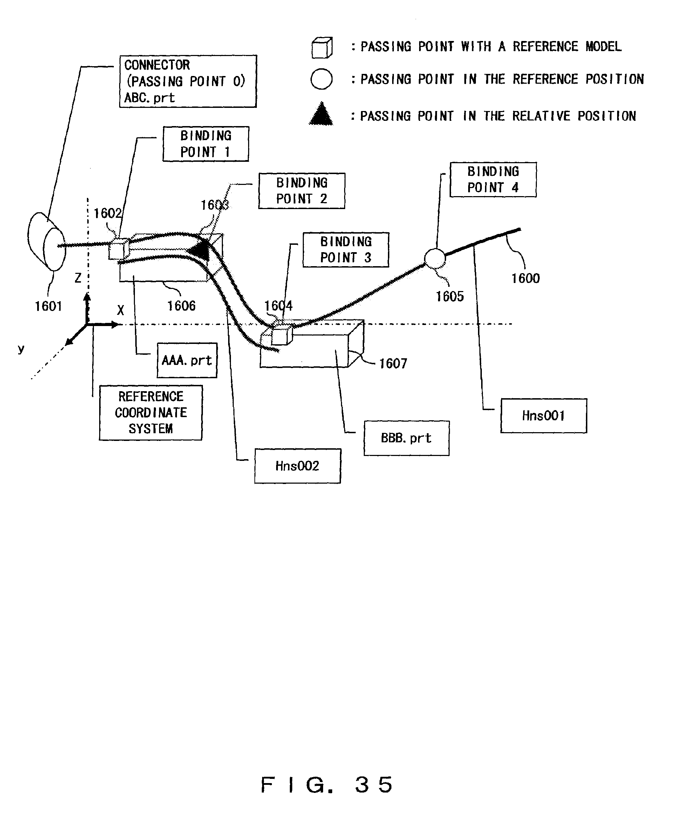

Fig. 35 shows an example of harness moved after being bound and a passing point.

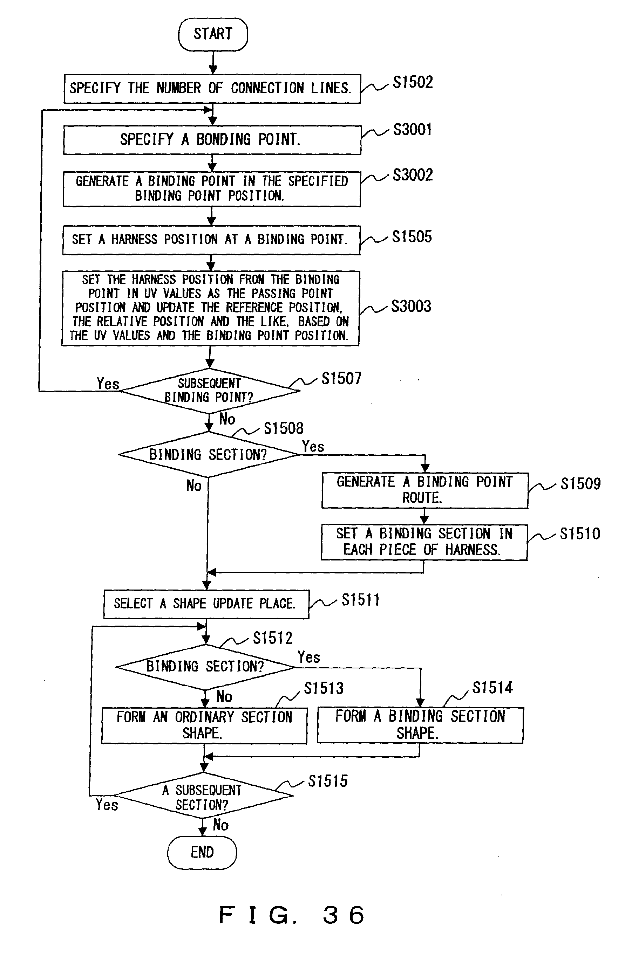

Fig. 36 is an operational flowchart for generating new bound harness without using existing harness.

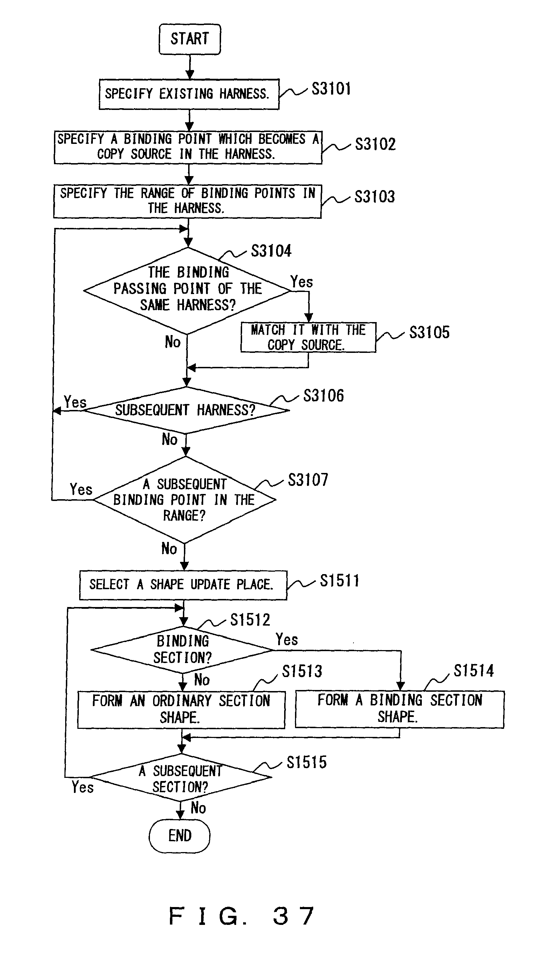

Fig. 37 is an operational flowchart for copying the layout of a binding point.

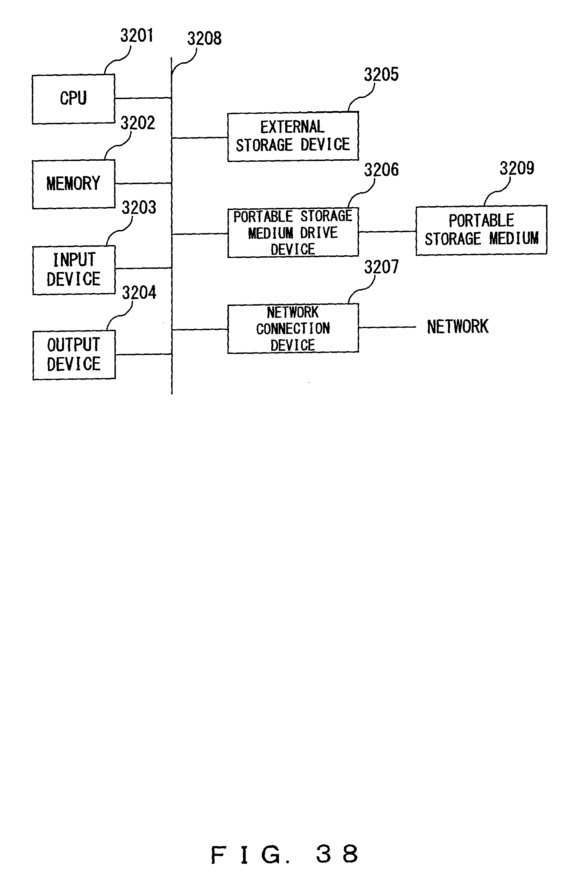

Fig. 38 shows the configuration of a computer system to which the preferred embodiment of the present invention is applied.

**Description of the Preferred Embodiment**

The best mode for implementing the present invention is described in detail below with reference to the drawings.

Fig. 7 shows the configuration of the preferred embodiment of a harness design support apparatus embodying the present invention.

<Configuration of the preferred embodiment of the present invention>

The design support apparatus 101 of this preferred embodiment shown in Fig. 7 comprises a harness management unit 102, a three-dimensional model management unit 103, a passing point management unit 104, a binding point management unit 105, a binding section management unit 106, a binding route management unit 107, a shape formation unit 108 and a display unit 109.

The harness management unit 102 edits and manages information about the route design of each piece of harness based on a user's input from an input device 110.

The three-dimensional model management unit 103 manages the model data of components mounted on a device to be designed (the three-dimensional model data of components disposed in virtual space). The management unit 103 comprises a model data database 103a and a verification model management unit 103b. The model data database 103a stores/manages the model data of the above-described components. The verification model management unit 103b manages the model data database 103a to register and delete the model data of components and so on.

The passing point management unit 104 manages information about the passing points of the route for each piece of harness in a form of a passing point table, which is described later, and the like.

The binding point management unit 105 stores a binding point table, which is described later, and manages the generation, update, deletion and the like, of a binding point for binding the passing points of harness.

The binding section management unit 106 stores a binding route-section management table, which is described later, and manages the configuration of binding points constituting each binding section, which is described later, and the number of harness belonging to a binding section and so on.

The binding route management unit 107 stores a section management table for each piece, which is described later, and manages whether a section belonging to each piece of harness is a binding section and the like.

The shape formation unit 108 generates ordinary harness composed of passing points, forms the curve and shape of a binding route composed of binding points and supplies them to the display unit 109.

The display unit 109 displays harness based on data from the shape formation unit 108. Especially, a binding point display unit 109a, a section display unit 109b, a section tree display unit 109c and the like controls the display of bound harness.

An output device 111 is a display device and the like for displaying display data from the display unit 109.

The input device 110 is an interface with input equipment, such as a keyboard, a mouse and the like from which a user inputs various kinds of operations.

<Operational principle of the preferred embodiment of the present invention>

Firstly, the operational principle of the preferred embodiment of the present invention with the above-described configuration is described.

«Binding point/binding passing point»

As shown in Fig. 8A, when a plurality of pieces of harness 201 is bound at one arbitrary point 202, the point is called a "binding point". The binding point is composed of the passing points 203 of the plurality of pieces of harness 201 called "binding passing points".

The binding point manages the position/ passing direction of the binding passing points in the binding point.

-Passing direction

As shown in Fig. 8B, the binding point 202 has one binding point passing direction 204. The passing directions of all binding passing points 203 in the binding point 202 are the passing point passing direction 204.

-Passing position

As shown in Fig. 8B, the binding point 201 has one binding point position 205.

As shown in Fig. 9A, the position of each binding passing point 301 (#1-3) in the binding point is managed by relative coordinates from the binding point position 302.

As shown in Fig. 9B, it is assumed that the above-described relative coordinate (u, v) in a bi-dimensional coordinate system 303 generated on a plane perpendicular to the binding point passing direction 304 using the binding point position 302 as the origin (hereinafter this coordinate system is called a "layout plane coordinate system") . The binding passing point 301 is determined by only coordinate (u, v) in the layout plane coordinate system 303. Although for the ordinary passing point of harness, a reference component local coordinate system 306 using the position of a neighboring reference component 305 as the reference and the like are used, in the binding point management, the above-described layout plane coordinate system 303 is used.

«Binding section»

As shown in Fig. 10, when a plurality of pieces of harness 401 (#1, #2) are bound by two continuous binding points (#A, #B), the section is called a binding section 403.

The shape of the binding section 403 is formed not by the formation parameter (the minimum curvature radius/degree/a section length calculation method/gravity) but by using the parameter of the binding section 403.

«Attribute in binding passing point»

The following attributes are added to all binding passing points.

-Passing point constituting a bundle (T)

-Passing point not constituting a bundle

Fig. 11 shows a case where the binding passing point 502 of harness is referring to the binding passing point 501. □ (501) and o (502) shown in Fig. 11 show a binding point and a binding passing point, respectively.

Dotted arrow mark 503 from the binding passing point 502 indicates that the binding point 501 stores the binding passing point 502.

«Binding route management»

As shown in Figs. 12A and 12B, a section 602 in which starting and ending passing points are the binding points 601 is called a binding section.

The binding section management unit 106 shown in Fig. 7 manages the number of harness belonging to the binding section 602. When the number of harness is less than two, the binding section 602 is released.

The binding section 602 is managed by the binding route management unit 107 shown in Fig. 7.

«Basic idea of binding route management»

The binding route management manages a binding point, section information and the minimum curvature radius. As binding point information, information about a binding point position and a binding point passing direction is stored. As the section information, information about a section length calculation method, a gravity flag, degree and the like is stored.

The binding route management manages the earlier-described information about a binding point.

Fig. 13 shows a case where bound harness is generated by referring to existing harness. Bound harness T001 is generated from existing harness Hns001.

Each binding point 702 (#1~#3) of the bound harness T001 has each layout plane coordinate system using each position of each passing point 701 (#1~#3) of the respective existing harness Hns001 as each origin position (see Figs. 9A and 9B).

After a binding point is generated, in each binding point 702 (#1~#2), each passing point of each piece of harness Hns001, Hns002 and Hns003 maintains relative coordinates in a layout plane coordinate system possessed by the binding point (see Fig. 9A). Therefore, the binding point has independent position information. Therefore, even when harness Hns001 being a reference is deleted later or another piece of harness is specified as a reference in the middle of the route, the binding point is not affected by them.

When the layout information (a binding passing point position, a binding point passing direction) of a binding point is modified, the layout information of each binding passing point belonging to the binding point is modified in conjunction with the modification of the layout information of the binding point while maintaining the relative position relationship in the layout plane coordinate system.

«Branch of binding route management»

In the following cases, it is coped by internally branching the binding route.

Case 1: when binding sections with different reference destinations continue.

Case 2: when the minimum curvature radius is modified in each binding section

Fig. 14 shows a case where a binding section is branched into two directions at a binding point T1 and in a binding point T2; the respective binding section is divided in order to modify the minimum curvature radius although there is no shape problem in that it is one piece of harness. As a result of the branch, harness groups 801-1, 801-2, 801-3 and 801-4 are related to the sections 1 (T001-1), 2 (T001-2), 3 (T001-3) and 4 (T001-4) of a binding route T001, respectively. Since there is one piece of harness in a section between passing points S13 and S14 and the number of harness is less than two, the harness group 802 is related to a single section of an independent binding route T002.

Fig. 15 shows a case where a binding section is divided in order to branch the binding section into four directions. As a result of the branch, harness groups 901-1-4 are related to the sections 1-4 (T001-1~4), respectively, of the binding route T001.

In Figs. 14 and 15, □ and o indicate a binding point and a binding passing point, respectively. Numbers inside □ and o indicate passing point numbers.

«Deletion condition of binding section»

When all binding sections in the binding route management enter the following states, the binding route management is deleted.

Case 1: when the number of the bound harness in a binding section is less than one

Case 2: when one binding point in a binding section becomes an ordinary passing point

Fig. 16A shows a case where all pieces of bound harness in a binding section are deleted. When the number of the bound harness in a binding section becomes one, the binding point in the binding route management T001 moves to the passing point of the harness Hns001.

Fig. 16A shows a case where one binding point in a binding section becomes an ordinary passing point.

«Copy of binding point»

The layout of a binding point can be copied.

For example, as shown in Fig. 17A, it is assumed that for three pieces of harness H1, H2 and H3, three binding points 1101 (#1~#3) are defined.

In this case, when the initial layout shown in Fig. 17B is made in the layout plane coordinate system of each binding point (see Figs. 9A and 9B), a user can instruct to copy, for example, the layout of the harness H2 and H3 of the binding point 1101 (#1) to the other binding points 1101 (#2 and #3).

As this result, as shown in Fig. 17C, the respective layout of the harness H2 and H3 of the binding points 1101 (#2 and #3) can be matched with the layout of the harness H2 and H3 of the binding point 1101 (#1).

«Shape formation of bound harness»

The shape formation method of harness in a binding section is described below.

Procedure 1: Calculation of binding section center curve

In the determination of the shape of each piece of harness belonging to a binding route, firstly, as shown in Fig. 18A, a curve connecting both starting/ending binding points constituting a binding route (called a "binding section center line") is calculated on basis of each parameter of the starting/ending binding points. In this case, since the binding point basically stores the same parameter as the passing point of harness, which is described later, quite the same method as used to calculate the curve of harness based on the passing point information of ordinary harness can be applied. This applicant has filed applications for a method for expressing harness in the following PCT applications.

Prior application 1 of this applicant: International Application No. PCT/JP2006/319596

Prior application 2 of this applicant: International Application No. PCT/JP2007/50189

Prior application 3 of this applicant: International Application No. PCT/JP2007/50187

Prior application 4 of this applicant: International Application No. PCT/JP2007/000695

In this preferred embodiment, a curve connecting each binding point is calculated by applying each of the above-described international application to the parameter of each binding point stored in a binding point table, which is described later.

Procedure 2: Calculation of binding section additional line

As shown in Fig. 18A, in each layout plane coordinate system 1204 of both binding points, each point is calculated by adding an arbitrary value of offset in U direction from each binding point position 1203 being each origin. A curve 1202 connecting each of the points is calculated in the same way as described above. This curve is called a binding section additional line.

Procedure 3: Calculation of division point

As shown in Fig. 18B, a binding section center line 1201 is divided between starting/ending binding points and at each division point, a plane using the tangential direction of the binding section center line 1201 and the position of the division point as the normal direction and the origin, respectively is formed. A direction from the origin toward an intersection point of the plane and a binding section additional line 1202 is specified as U direction and V direction vector is calculated as the outer product of the normal direction vector and the U direction vector. Thus, an UV layout plane at the division point is calculated.

Procedure 4: Calculation of binding passing point interpolation point at division point

Coordinates obtained by linearly interpolating the relative coordinates of each binding passing point at the starting/ending binding points by a curve length ratio corresponding to each division point for each piece of harness passing a target binding section is calculated as coordinates of the binding passing interpolation point at each division point (see Figs. 9A and 9B).

For example, when in some harness passing a binding section, the relative coordinates of a binding passing point at starting and ending binding points are (U0, V0) and (U20, V20), respectively, interpolation coordinate (Ut, Vt) at the middle point of the binding section center line (curve length ratio=50%) is calculated as follows.

$$Ut = 0.5 \times (U20 - U0) + U0$$

$$Vt = 0.5 \times (V20 - V0) + V0$$

Procedure 5: Formation of harness shape connecting binding passing interpolation points

A curve connecting each binding passing point at both starting/ending binding points and a binding passing point interpolation point at each division point is calculated as a harness center line in the same way as described above.

A harness shape is formed from the harness center line and a separately stored harness diameter.

Figs. 19A, 19B and 20 show an example of a harness shape displayed on the output device 111 from the display unit 109 shown in Fig. 7 by the above-described operation. Fig. 19A shows the image of the binding point of harness displayed by the binding point display unit 109a shown in Fig. 7. Fig. 19B shows the image of a binding section displayed by the section display unit 109b shown in Fig. 7. Fig. 20 shows the image of a binding route displayed by the section tree display unit 109c shown in Fig. 7 and the tree display of harness constituting it.

<Detailed description of operation of generating bound harness using existing harness>

The details of the preferred embodiment of the present invention operated on the basis of the above-described operational principle are sequentially described below. Firstly, the detailed operation of generating bound harness using existing harness is described.

Fig. 21 is an operational flowchart showing the operation of the harness design support apparatus shown in Fig. 7 to generate bound harness using existing harness.

In the following description, the procedure of generating a binding route by adding another piece of harness to the route 1600 of harness Hns001 generated using the methods disclosed in the above-described prior applications 1~4 of this applicant, as shown in Fig. 22, is described.

As to the harness Hns001 shown in Fig. 22, the passing point management unit 104 shown in Fig. 7 stores the passing point table shown in Fig. 23 of the passing points 1, 2, 3 and 4 shown by 1602~1605 shown in Fig. 22. Specifically, this passing point table stores passing point information being the attribute of each passing point.

In this application, as in the above-described prior application 1 of this applicant, reference coordinate using the origin of a virtual space coordinate system, relative coordinates using another passing point as the reference and a model reference using a component (model) disposed in virtual space are prepared as position references being references in specifying the position of a passing point and position management is performed by a plurality of position references. More specifically, in a passing point in which the model reference is specified, position management is also performed by reference coordinates and relative coordinates in addition to the model reference. In a passing point in which the model reference is not specified, position management is performed by reference coordinates and relative coordinates. Since position management is performed by a plurality of types of position references, as shown in Fig. 23, priority is managed as an attribute in order to specify an effective one of the plurality of types of position references. Thus, in a passing point where priority is set in the order of a model reference, relative coordinates and reference coordinates when a specified component (reference model) is modified, its position is specified by relative coordinates. When furthermore a parent passing point is deleted, it is specified by reference coordinates. By using a plurality of types of position references is used for position management, the positions of other passing points can be certainly specified even when a passing point is deleted or a reference model is modified. A passing direction is also managed by other individual passing direction reference coordinates in the same way. As one example of the calculation of this passing direction, the method disclosed in the prior application 3 of this applicant can be adopted. For the detailed management of a passing point position and a passing direction, see the prior applications 1 and 3 of this applicant.

As items especially related to the present invention, ON/OFF information 1701 indicating whether the passing point belongs to a binding point, the number 1702 of a binding point to which the passing point belongs and relative coordinate UV values 1703 are stored the passing point table shown in Fig. 23 for each passing point (see Figs. 9A and 9B).

Presuming the above-described management method, firstly, in Fig. 22, for example, the passing points 1 and 3 are selected as both end passing points of a binding route section against existing harness Hns001 by a user operation from the input device shown in Fig. 7 (S1501 shown in Fig. 21). The harness management unit 102 and passing point management unit 104 shown in Fig. 7 perform this operation.

Then, the passing points 1, 2 and 3 being binding passing points are extracted from the specified passing point section (S1503 shown in Fig. 21).

Then, the binding point position of a binding point 0 (the origin of the layout plane coordinate system) is generated in the same position as the passing point 1. The UV direction of a binding point 1 (layout plane coordinate system) id determined on the basis of the reference destination of the position information of the passing point 1. For example, when there is a reference model, the normal direction from the model surface is specified as a U direction and a V direction is calculated as the outer product of the U direction and the passing direction. When the passing direction is not fixed and specified, it is automatically calculated. Similarly, the passing points 2 and 3 are specified as binding points 1 and 2, respectively, and the binding point position/binding point passing direction/layout plane coordinate system of each binding point are generated. Then, passing point information belonging to each binding point is added and the binding point table shown in Fig. 24 is generated. This binding point table manages one obtained by adding the passing point information stored in the passing point table shown in Fig. 23 vector information 1801 about the two-axis direction of U and V directions for specifying the layout plane coordinate system and information 1802 about harness belonging to the binding point and its passing point number as binding point information. As a passing point belonging to the binding point 1, the passing point 1 of the harness Hns001 being the reference is registered and the passing point 0 of the added harness Hns002 is registered. Similarly, the passing point number of each piece of harness is entered in the binding points 2 and 3 (S1504 shown in Fig. 219.

The binding point management unit 105 performs the processes in S1502, S1503 and S1504 shown in Fig. 21.

Then, the binding point layout of harness to be added to the generated binding point 1 is determined (S1505 shown in Fig. 21).

A user can specify this layout from the input device 110 using the layout screen of a binding point, shown in Fig. 25. As to the initial value, the passing point position of the harness Hns001 becomes the origin of the layout plane coordinate system. Once this origin id determined, the origin of the layout plane coordinate system does not follow even when the passing point of the harness Hns001 is moved in the binding point layout. The layout of the binding point is projected on the layout screen shown in Fig. 25.

In the example shown in Fig. 25, the cross section (circle) of the passing point 1 of the harness Hns001 is indicated by a broken line. In Fig. 25, the center of the broken line circle ids the position of the passing point 1.

As to the initial position, since the binding point 1 is disposed in the same position/direction as the passing point 1, as shown in Fig. 25, the passing point 1 of the harness Hns001 is disposed at the origin of the layout plane coordinate system and the added harness is automatically laid out in such a way that the circumcircle of the cross section may become a minimum. In this state, as shown in Fig. 26, although information 2001 and 2002 about the selected binding point is written into the passing point table, the coordinates in the layout plane coordinate system indicates the origin (2003 shown in Fig. 26) .

In this state, the user determines the disposition position in the binding point by moving each passing point position of each of the harness Hns001 and Hns002 in the binding point on the layout screen using the input device 110, as shown in Fig. 27. In the example shown in Fig. 27, the U and V values of the passing point position of the harness Hns001 are 2.5 and 0.0, respectively (U=2.5, V=0.0), and those of the passing point position of the harness Hns002 are -5.0 and -5.0, respectively (U=-5.0, V=-5.0), respectively (S1505 shown in Fig. 21).

After the above-described user's operation is completed, information about the above-described layout is registered, for example, as 2201, 2202 and 2203 shown in Fig. 28. In the examples shown in Figs. 27 and 28 the same UV coordinate values (the same cross section layout) are specified at all binding points. Alternatively, different UV coordinate values can be set at an individual binding point. Since the position of the passing point of the harness Hns001 is modified on the layout screen, the coordinates are also modified accordingly. Firstly, the U value increases 2.5 times from the initial state. Since the U and passing directions of each passing point specified this time coincide with the Z and X directions, respectively, of the coordinates, as shown in Fig. 28, the respective values of the reference position and reference model relative position increase 2.5 times following the change of the U direction. Since the UV plane of each passing point is the same, there is no change in its relative position (S1506 shown in Fig. 21).

As described above, the operations in S 1505 and 1506 shown in Fig. 21 are repeatedly applied to all binding points (loop process of S1505→S1506→S1505 shown in Fig. 21). The binding point management unit 105 shown in Fig. 7 performs these operations.

Then, a binding route is generated in a section where there are two pieces or more of harness between binding points (S1508 →S1509 shown in Fig. 21) . In this case, a section in which each piece of harness continues from the binding point table shown in Fig. 24 is checked and a binding route is generated in each continuous section. For example, in Fig. 24, attention is paid to adjacent binding points 0 and 1. Harness belonging to the bonding points 0 and 1 is Hns001 and Hns002, respectively, and the passing point of each piece of harness is continuously (adjacently) tied. For example, as to harness Hns001, its passing points are 1 and 2 at the binding points 0 and 1, respectively. Thus, since there are two pieces of harness between the binding points 0 and 1, a binding route is generated. As a result, a binding route T001 is generated for binding points 0, 1 and 2. T001 is a route generated between binding point positions (UV origin) and is specified by the binding route-section management table as shown in Fug. 29. This route is calculated by the calculation method disclosed by the above-described prior application 3 of this applicant. The above-described operations are performed by the binding section management unit 106 shown in Fig. 7 and are managed by the binding route-section management table shown in Fig. 29.

Then, a section is set between passing points for each piece of harness, based on the registration contents of the passing point table shown in Fig. 28 or the like. Then, a binding point to which the passing points belong is extracted from the passing point table and further a binding section to which the binding point belongs is extracted from the binding route-section management table shown in Fig. 29, which are set in the section between passing points. As a result, the section management tables as shown in Figs. 30A and 30B is generated for each piece of harness (S1510 shown in Fig. 21). The binding route management unit 107 shown in Fig. 7 performs the above-described operations and manages the section management tables for each piece of harness as shown in Figs. 30A and 30B.

Then, the system selects a shape update place (S1511 shown in Fig. 21). This update place operation is performed by the method disclosed by the earlier-described prior application 4 of this applicant. Then, while referring to the section management tables shown in Fig. 30A and 30B, corresponding to it for each piece of harness, each section is verified and it is determined whether the section is a binding section (S1512 shown in Fig. 21).

If the section is not a binding section, a harness shape for an ordinary section is formed (S1512→S1513 shown in Fig. 21). This shape formation operation is performed by the method disclosed by the above-described prior applications 1~4 of this applicant. Then, the flow moves to the process of a subsequent section (S1513→S1515→S1512 shown in Fig. 21).

If the section is a binding section, a harness shape for a binding section is formed (S1512→S1514 shown in Fig. 21). This shape formation operation is performed by the method described above in the <shape formation of bound harness> of the "operational principle of the preferred embodiment of the present invention". Then, the flow moves to the process of a subsequent section (S1514→S1515→S1512 shown in Fig. 21).

The shape formation unit 108 shown in Fig. 7 performs the above-described loop process for each section in S1512~S1515.

The section management table for each piece of harness manages the shape formed thus, which is not especially shown in Fig. 21). Its details are disclosed by the prior application 4 of this applicant and the like. The display unit 109 shown in Fig. 7 displays binding points and the like on the output device 111 based on the formed harness shape.

By the above-described control operations, for example, harness Hns002 is added to the harness Hns001 shown in Fig. 22 and the harness shape as shown in Fig. 31 is displayed.

<Detailed description of operation of moving bound harness>

Next, the detailed operation of bound harness is described.

Fig. 32 is an operational flowchart showing the operation performed by the harness design support apparatus shown in Fig. 7 when moving bound harness.

In the following description, the movement procedure of a binding route in which harness Hns001 and Hns002 are bound as shown in Fig. 31 is described.

Firstly, a user moves binding point 1 by -40mm in the Z direction by the operation of a mouse drag and the like on the input device 110 shown in Fig. 7 (S2601 shown in Fig. 32).

As a result, as shown in Fig. 33, the binding point management unit 105 shown in Fig. 7 managing the binding point table updates the reference position of a binding point 1 and the relative position of a binding point 2 in the binding point table (S2602 shown in Fig. 32).

Then, the binding point management unit 105 detects that the passing point 2 of the harness Hns001 and passing point 1 of the harness Hns002, which belong to the binding point table should be updated by referring to information about the updated binding point 1 in the binding point table managed by it and the corresponding items in the passing point table managed by the passing point management unit 104 shown in Fig. 7 are updated (S2603 shown in Fig. 32). For example, in the passing point table shown in Fig. 28 of harness Hns001, the reference position of the passing point 1 is updated by -40mm in the Z-axis direction and also the relative position of the passing point 2 is updated, thereby obtaining the contents shown in Fig. 34.

Then, when the system selects a shape update place (S2604 shown in Fig. 32), while referring to the section management tables shown in Fig. 30A and 30B, corresponding to it for each piece of harness, each section is verified and it is determined whether the section is a binding section (S2605 shown in Fig. 32).

If the section is not a binding section, a harness shape for an ordinary section is formed (S2605→S2606 shown in Fig. 32) . This shape formation operation is the same as the operation in S1512→S1513 shown in Fig. 21. Then, the flow moves to the process of a subsequent section (S2606→S2608→S2605 shown in Fig. 32).

If the section is a binding section, a harness shape for a binding section is formed (S2605→S2607 shown in Fig. 21). This shape formation operation is the same as the operation in S1512→S1514 shown in Fig. 21. Then, the flow moves to the process of a subsequent section (S2607→S2608→S2605 shown in Fig. 32).

By the above-described control operations, for example, harness Hns002 is added to the harness Hns001 shown in Fig. 22 and the harness shape as shown in Fig. 35 is displayed.

In the above-described movement operation of a binding point, the passing points of harness belonging to the binding point can be collectively modified, thereby providing a harness design support function very easy to use.

<Detailed description of operation of generating new bound harness without using existing harness>

Fig. 36 is an operational flowchart showing the operation of the harness design support apparatus shown in Fig. 7 in the case where generating bound harness without using existing harness.

Here, only differences from when generating bound harness using existing harness are described. In Fig. 36, in steps to which the same reference numerals as in Fig. 21 are attached, the same operation as in Fig. 21 is performed.

In this case, since existing harness is not used in the generation of a binding point, a bound harness is generated while specifying a new binding point in step S3001. In this case, various kinds of attribute items constituting a binding point table as in the registration of an ordinary passing point (see Fig. 4, etc.) are newly specified via the input device 110 shown in Fig. 7 and the contents are registered (S3002).

After the above specification, as to the currently processed binding point the layout of harness is set as in S1505 shown in Fig. 21. Although the function of a subsequent S3003 is almost the same as that of S1506 shown in Fig. 21, it differs from that in that the passing point information of each piece of harness determined in S1505 is first registered in the passing point table at this moment.

The others are the same as in Fig. 21.

<Detailed description of operation of copying the layout of binding point>

The details of the copy operation of the binding point layout described above in the <Copy of binding point> of the "Operational principle of the preferred embodiment of the present invention" are described.

Fig. 37 is an operational flowchart showing the operation of the harness design support apparatus shown in Fig. 7 in the case where copying the layout of a binding point.

In Fig. 37, in steps S1511-S1515 to which the same reference numerals as in Fig. 21 are attached, the same operation as in Fig. 21 is performed.

Firstly, a user specifies existing harness including a binding point from the input device 110 (S3101 shown in Fig. 37), and further specifies a binding point being its copy source in the specified harness (S3102 shown in Fig. 37). This corresponds to, for example, the earlier-described binding point 1101 (#1) shown in Fig. 17.

Then, the user specifies the range of binding points being copy destination in the harness from the input device 110 (S3103 shown in Fig. 37). This corresponds to, for example, the earlier-described binding points 1101 (#2) and 1101 (#3) shown in Fig. 17.

Then, when the binding passing point of the same harness is detected in the copy destination binding point (Yes in S3104 shown in Fig. 37) while detecting harness whose layout should be copied (corresponding to H2 and H3 shown in Fig. 17C) (the loop process in S3104~S3106 shown in Fig. 37), the layout of the binding passing point is matched with the copy destination layout (S3105 shown in Fig. 37). More specifically, UV coordinate values set in the passing point table in relation to the binding passing point of target harness belonging to the copy source binding point are copied to the passing point table corresponding to the binding passing point of target harness belonging to a copy destination binding point. The binding point management unit 105 shown in Fig. 7 performs this operation.

After the copy process of the layouts of all pieces of harness as to one copy destination binding point (No in S3106 shown in Fig. 37), as other copy destination binding points in the specified range, the similar process is performed (loop process in S3104~S3107 shown in Fig. 37).

After the copy process of the layouts of all binding points are completed thus (No in S3107 shown in Fig. 37), the shape of harness whose layout copy is completed is formed and displayed by the same processes as those in S1511~S1515 shown in Fig. 21.

<Computer system for executing a program for realizing the preferred embodiment of the present invention>

Fig. 38 shows one example of the hardware configuration of a computer system capable of realizing the design support function shown in Fig. 7.

The computer shown in Fig. 38 comprises a CPU 3201, memory 3202, an input device 3203, an output device 3204, an external storage device 3205, a portable storage medium drive device 3206 in which a portable storage medium 3209 is inserted and a network connection device 3207, which are connected to each other via a bus 3208. The configuration shown in Fig. 38 is one example of a computer capable of realizing the above-described system and the configuration of such a computer is not limited to this.

The CPU 3201 controls the entire computer. The memory 3202 is memory, such as RAM and the like, for temporarily storing a program or data stored in the external storage device 3205 (or portable storage medium 3209) in the execution of the program, the update of the data and the like. The CPU 3201 controls the entire system by reading and executing the program in the memory 3202.

The input device 3203 comprises, for example, a keyboard, a mouse and the like and their interface control device. The input device 3203 detects the input operation of the keyboard, the mouse and the like by a user and notifies the CPU 3201 of the detection result.

The output device 3204 comprises a display device, a print device and the like and their interface control device. The output device 3204 outputs data transmitted under the control of the CPU 3201 to the display device and the print device.

The external storage device 3205 is, for example, a hard disk storage device. It is chiefly used to store various types of data and a program.

The portable storage medium drive device 3206 accommodates portable storage media 3209, such as an optical disk, SDRAM, compact flash memory and the like and plays the auxiliary role of the external storage device 3205.

The network connection device 3207 is used to connect communication lines, such as LAN (local area network), WAN (wide area network) and the like.

The computer system shown in Fig. 38 is realized by the CPU 3201 executing a program for realizing the function of each unit of the design support system shown in Fig. 7. The program can be stored, for example, in the external storage device 3205 or the portable storage medium 3209 and distributed. Alternatively, the network connection device 3207 can obtain it from a network.

Although the preferred embodiment has been so far described using a harness design support apparatus as an example, the present invention is not limited to this. It can be implemented as a design support apparatus for a metal cable, an optical cable or their mixture.

The present invention can be also naturally applied to an apparatus for supporting the design of harness and a cable not only in a device but also between devices and in a building.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A binding management apparatus (101) for supporting a design of disposition and shapes of a flexible object by storing and managing an attribute of each passing point in a virtual space, of a string- or belt-shaped flexible object as passing point information, comprising:

   a binding point information storage unit storing an attribute of a binding point obtained by binding each of the passing points as binding point information including relationship information indicating a relationship with passing point information of each of the passing points and independent of each piece of the passing point information; and
   a binding point management unit (105) collectively managing disposition and shapes of a plurality of bound flexible objects by editing the binding point information stored in the binding point information storage unit and reflecting the edition result in the passing point information related to the binding point information, based on the relationship information included in it.

**2.** The binding management apparatus (101) according to claim 1, further comprising:

a binding section management unit (106) enabling the binding point management unit to individually manage each binding section in which the binding state of a flexible object differs using the binding point as a boundary.

**3.** The binding management apparatus (101) according to claim 2, further comprising:

a binding section display unit (109) arranging and displaying a bound state of the flexible object for each flexible object and for each binding section.

**4.** The binding management apparatus (101) according to any of the preceding claims, further comprising:

a passing point management unit (104) managing disposition and a shape of the unbound part by editing the passing point information of a part in which a flexible object is not bound.

**5.** The binding management apparatus (101) according to any of the preceding claims, wherein the relationship information includes layout information indicating a relative position relationship between the binding point corresponding to the binding point information including it and the passing point corresponding to the passing point information specified by the relationship information and the binding point management unit manages layout of each of the plurality of bound flexible objects based on the layout information.

**6.** The binding management apparatus (101) according to claim 5, wherein the binding point management unit (105) calculates a binding route for indicating a route of the plurality of bound flexible objects based on the binding point information stored in the binding point information storage unit and also interpolates an individual route of the bound flexible object from the binding route and calculates it based on the layout information.

**7.** A binding management method for supporting a design of disposition and shapes of a flexible object by storing and managing an attribute of each passing point in a virtual space, of a string- or belt-shaped flexible object as passing point information, comprising:

storing an attribute of a binding point obtained by binding each of the passing points as binding point information including relationship information indicating a relationship with passing point information of each of the passing points and independent of each piece of the passing point information; and
collectively managing disposition and shapes of the plurality of bound flexible objects by editing the stored binding point information and reflecting the edition result in the passing point information related to the binding point information, based on the relationship information included in it.

**8.** A binding management program for enabling a computer for supporting a design of disposition and shapes of a string- or belt-shaped flexible object by storing an attribute of each passing point in a virtual space, of the flexible object to execute a process, the process comprising:

storing an attribute of a binding point obtained by binding each of the passing points as binding point information including relationship information indicating a relationship with passing point information of each of the passing points and independent of each piece of the passing point information; and
collectively managing disposition and shapes of the plurality of bound flexible objects by editing the stored binding point information and reflecting the edition result in the passing point information related to the binding point information, based on the relationship information included in it.

**9.** A computer readable medium storing a binding management program according to claim 8.

F I G. 1

POSITION TO BE BOUND

HARNESS
(4 PIECES)

F I G. 2

HARNESS (4 PIECES)

F I G. 3

3602

REFERENCE HARNESS 3601

HARNESS PLACED ALONG
THE REFERENCE HARNESS 3603

F I G. 4

3702

REFERENCE ROUTE 3701

ROUTE PLACED ALONG
THE REFERENCE ROUTE 3703

F I G. 5

THE FIRST REFERENCE HARNESS 3801

THE SECOND REFERENCE HARNESS 3802

F I G. 6

INPUT DEVICE — 110

101

HARNESS MANAGEMENT UNIT

102

104

PASSING POINT MANAGEMENT UNIT

103

THREE-DIMENSIONAL MODEL

103a

103b

MODEL DATA

VERIFICATION MODEL MANAGEMENT UNIT

BINDING POINT MANAGEMENT UNIT

105

BINDING SECTION MANAGEMENT UNIT

106

BINDING ROUTE MANAGEMENT UNIT

107

109

SHAPE FORMATION UNIT

108

DISPLAY

BINDING POINT DISPLAY UNIT — 109a

SECTION DISPLAY UNIT — 109b

SECTION TREE DISPLAY UNIT — 109c

OUTPUT DEVICE — 111

F I G. 7

BINDING POINT 202  BINDING PASSING POINT 203

F I G. 8 A

HARNESS 201

BINDING POINT 202  BINDING PASSING POINT 203

F I G. 8 B

LAYOUT PLANE 206

BINDING POINT
POSITION 205  BINDING POINT
PASSING DIRECTION 204

## F I G. 9 A

BINDING PASSING POINT 301 (#1) (u1, v1)
BINDING PASSING POINT 301 (#2) (u2, v2)
BINDING PASSING POINT 301 (#3) (u3, v3)

V

U

BINDING POINT POSITION 302

LAYOUT PLANE
COORDINATE SYSTEM 303

## F I G. 9 B

BINDING POINT
POSITION 302

LAYOUT PLANE
COORDINATE SYSTEM 303

U

V

BINDING POINT PASSING
DIRECTION 304 (TANGENTIAL LINE)

Z

Y

X

REFERENCE
COMPONENT
LOCAL
COORDINATE
SYSTEM306

REFERENCE COMPONENT 305

BINDING
POINT 402 (#A)

BINDING
POINT 402 (#B)

HARNESS 401 (#1)

BINDING
SECTION 403

HARNESS 401 (#2)

F I G. 1 0

BINDING POINT 501

503

BINDING PASSING POINT 502

F I G. 1 1

F I G. 1 2 A

BINDING
POINT 601

BINDING
SECTION 602

BINDING
POINT 601

F I G. 1 2 B

NON-BINDING
POINT 603

BINDING
POINT 601

NON-BINDING SECTION

Hns001

PASSING
POINT 701 (#1)
BINDING
POINT 702 (#1)

PASSING
POINT 701 (#2)
BINDING
POINT 702 (#2)

PASSING
POINT 701 (#3)
BINDING
POINT 702 (#3)

BINDING ROUTE
MANAGEMENT
(T001)

Hns001

Hns002

Hns003

F I G. 1 3

F I G. 1 4

F I G. 1 5

BINDING ROUTE
MANAGEMENT
(T001)

Hns001

**F I G. 1 6 A**

BINDING ROUTE
MANAGEMENT
(T001)

Hns001

Hns002

Hns003

TO AN ORDINARY
PASSING POINT

Hns001

Hns002

Hns003

**F I G. 1 6 B**

BINDING ROUTE MANAGEMENT

BINDING
POINT 1101 (#1)

BINDING
POINT 1101 (#2)

BINDING
POINT 1101 (#3)

FIG. 17A

INITIAL LAYOUT

BINDING
POINT 1101 (#1)

BINDING
POINT 1101 (#2)

BINDING
POINT 1101 (#3)

FIG. 17B

REFLECT THE LAYOUT OF BINDING POINT 1101 (#1) IN BINDING POINTS 1102 (#2) AND 1102 (#3)

== >COPY UV COORDINATE VALUES (SEE FIG. 3) IN THE LAYOUT OF BINDING POINT 1101 (#1) WITHOUT PERFORMING ANY PROCESS

BINDING
POINT 1101 (#1)

BINDING
POINT 1101 (#2)

BINDING
POINT 1101 (#3)

FIG. 17C

BINDING POINT POSITION 1203

LAYOUT PLANE COORDINATE SYSTEM 1204 ----

BINDING SECTION CENTER LINE 1201

BINDING POINT POSITION 1203

BINDING SECTION
AUXILIARY LINE (U DIRECTION) 1202

LAYOUT PLANE COORDINATE
SYSTEM 1204

## FIG. 18A

BINDING SECTION CENTER LINE 1201

DIVISION POINT 1205

DIVISION
POINT 1205

DIVISION
POINT 1205

BINDING SECTION AUXILIARY LINE 1202

## FIG. 18B

FIG. 19A

SELECTED SECTION

FIG. 19B

Hns001
  Hns001_1
  Hns001_A
  Hns001_2

  Hns002_1
  Hns002_A
  Hns002_2

*XXXXX_A→WHEN THE BINDING ROUTE TAKES THE SAME ROUTE IN OTHER PIECES OF HARNESS, THE NAME OF THE BINDING ROUTE IS MADE THE SAME (EXAMPLE: HNS001_A AND HNS002_A)

Hns001_A

Hns001_1

Hns001_2

BINDING ROUTE

Hns002_2

Hns002_A

Hns002_1

F I G.   2 0

START

SPECIFY THE STARTING/ENDING POINTS OF A BINDING POINT FROM THE PASSING POINT OF EXISTING HARNESS. — S1501

SPECIFY THE NUMBER OF CONNECTION LINES. — S1502

EXTRACT A PASSING POINT BETWEEN THE STARTING/ENDING POINTS. — S1503

GENERATE A BINDING POINT IN THE EXTRACTED PASSING POINT POSITION. — S1504

SET A HARNESS POSITION AT THE BINDING POINT. — S1505

SET THE HARNESS POSITION FROM THE BINDING POINT IN UV VALUES AS THE PASSING POINT POSITION AND UPDATE THE REFERENCE POSITION, THE RELATIVE POSITION AND THE LIKE, BASED ON THE UV VALUES AND THE BINDING POINT POSITION. — S1506

SUBSEQUENT BINDING POINT? — S1507    Yes

No

BINDING SECTION? — S1508    Yes

No

GENERATE A BINDING POINT ROUTE. — S1509

SET A BINDING SECTION IN EACH PIECE OF HARNESS. — S1510

SELECT A SHAPE UPDATE PLACE. — S1511

BINDING SECTION? — S1512    Yes

No — S1513

FORM AN ORDINARY SECTION SHAPE.

FORM A BINDING SECTION SHAPE. — S1514

SUBSEQUENT SECTION? — S1515    Yes

No

END

F I G. 2 1

F I G. 2 2

| PASSING POINT NO. | 1 | 2 | 3 | 4 |
|---|---|---|---|---|
| RELATIVE POSITION COORDINATES (A) | H1 | PASSING POINT NO. 01 | PASSING POINT NO. 02 | PASSING POINT NO. 03 |
| RELATIVE POSITION (Xa, Ya, Za) | 30, 40, 40 | 20, 0, 40 | 20, 0, -70 | 20, 0, 50 |
| REFERENCE POSITION COORDINATES (B) | H1 | H1 | H1 | H1 |
| REFERENCE POSITION (Xb, Yb, Zb) | 30, 40, 40 | 50, 40, 80 | 70, 40, 10 | 90, 40, 60 |
| REFERENCE MODEL (C) | AAA. prt | - | BBB. prt | - |
| REFERENCE MODEL RELATIVE POSITION (Xc, Yc, Zc) | 0, 5, 0 | - | 10, 20, 10 | - |
| PRIORITY1 | C | A | C | B |
| PRIORITY2 | A | B | A | A |
| PRIORITY3 | B | - | B | - |
| FIXING OF PASSING DIRECTION | ON | OFF | OFF | ON |
| PASSING DIRECTION REFERENCE COORDINATES | AAA. prt | PASSING POINT NO. 01 | BBB. prt | H1 |
| PASSING DIRECTION RX | 1. 0 | 1. 0 | 1. 0 | 0. 7 |
| PASSING DIRECTION RY | 0 | 0 | 0 | 0 |
| PASSING DIRECTION RZ | 0 | 0 | 0 | 0. 7 |
| BINDING POINT | OFF | OFF | OFF | OFF |
| BINDING POINT NO. | - | - | - | - |
| BINDING POINT U VALUE | - | - | - | - |
| BINDING POINT V VALUE | - | - | - | - |

1701

1702

1703

FIG. 23

| BINDING POINT NO. | 0 | 1 | 2 |
|---|---|---|---|
| RELATIVE POSITION COORDINATE (A) | H1 | BINDING POINT NO. 0 | BINDING POINT NO. 01 |
| RELATIVE POSITION (Xa, Ya, Za) | 30, 40, 40 | 20, 0, 40 | 20, 0, -70 |
| REFERENCE POSITION COORDINATE (B) | H1 | H1 | H1 |
| REFERENCE POSITION (Xb, Yb, Zb) | 30, 40, 40 | 50, 40, 80 | 70, 40, 10 |
| REFERENCE MODEL (C) | AAA. prt | - | BBB. prt |
| REFERENCE MODEL RELATIVE POSITION (Xc, Yc, Zc) | 0, 5, 0 | - | 10, 20, 10 |
| PRIORITY1 | C | A | C |
| PRIORITY2 | A | B | A |
| PRIORITY3 | B | - | B |
| FIXING OF PASSING DIRECTION | ON | OFF | OFF |
| PASSING DIRECTION REFERENCE COORDINATES | AAA. prt | BINDING POINT 0 | BBB. prt |
| PASSING DIRECTION RX (VECTOR) | 1.0 | 1.0 | 1.0 |
| PASSING DIRECTION RY (VECTOR) | 0 | 0 | 0 |
| PASSING DIRECTION RZ (VECTOR) | 0 | 0 | 0 |
| U DIRECTION RX (VECTOR) | 0 | 0 | 0 |
| U DIRECTION RY (VECTOR) | 0 | 0 | 0 |
| U DIRECTION RZ (VECTOR) | 1.0 | 1.0 | 1.0 |
| V DIRECTION RX (VECTOR) | 0 | 0 | 0 |
| V DIRECTION RY (VECTOR) | 1.0 | 1.0 | 1.0 |
| V DIRECTION RZ (VECTOR) | 0 | 0 | 0 |
| BELONGING HARNESS AND PASSING POINT NO. | Hns001 : 1 <br> Hns002 : 0 | Hns001 : 2 <br> Hns002 : 1 | Hns001 : 3 <br> Hns002 : 2 |

1801

1802

F I G.   2 4

## BINDING POINT LAYOUT

**SELECTED HARNESS INFORMATION**

CROSS SECTION POSITION :

U : `0.0`

V : `0.0`

DESCRIPTION `Hns001`

DIAMETER : `5`

COLOR :

**LAYOUT PREVIEW**

CROSS SECTION OF HNS001

CROSS SECTION OF Hnn002

AUTOMATIC LAYOUT | REFERENCE MODIFICATION | OK | CANCEL

F I G.  2 5

| PASSING POINT NO. | 1 | 2 | 3 | 4 |
|---|---|---|---|---|
| RELATIVE POSITION COORDINATE (A) | H1 | PASSING POINT NO. 01 | PASSING POINT NO. 02 | PASSING POINT NO. 03 |
| RELATIVE POSITION (Xa, Ya, Za) | 30, 40, 40 | 20, 0, 40 | 20, 0, -70 | 20, 0, 50 |
| REFERENCE POSITION COORDINATE (B) | H1 | H1 | H1 | H1 |
| REFERENCE POSITION (Xb, Yb, Zb) | 30, 40, 40 | 50, 40, 80 | 70, 40, 10 | 90, 40, 60 |
| REFERENCE MODEL (C) | AAA. prt | – | BBB. prt | – |
| REFERENCE MODEL RELATIVE POSITION (Xc, Yc, Zc) | 0, 5, 0 | – | 10, 20, 10 | – |
| PRIORITY1 | C | A | C | B |
| PRIORITY2 | A | B | A | A |
| PRIORITY3 | B | – | B | – |
| FIXING OF PASSING DIRECTION | ON | OFF | OFF | ON |
| PASSING DIRECTION REFERENCE COORDINATES | AAA. prt | PASSING POINT NO. 01 | BBB. prt | H1 |
| PASSING DIRECTION RX | 1. 0 | 1. 0 | 1. 0 | 0. 7 |
| PASSING DIRECTION RY | 0 | 0 | 0 | 0 |
| PASSING DIRECTION RZ | 0 | 0 | 0 | 0. 7 |
| BINDING POINT | ON | ON | ON | OFF |
| BINDING POINT NO. | 1 | 2 | 3 | – |
| BINDING POINT U VALUE | 0. 0 | 0. 0 | 0. 0 | – |
| BINDING POINT V VALUE | 0. 0 | 0. 0 | 0. 0 | – |

2001
2002
2003

FIG. 26

F I G. 2 7

| PASSING POINT NO. | 1 | 2 | 3 | 4 |
|---|---|---|---|---|
| RELATIVE POSITION COORDINATE (A) | H1 | PASSING POINT NO. 01 | PASSING POINT NO. 02 | PASSING POINT NO. 03 |
| RELATIVE POSITION (Xa, Ya, Za) | 30, 40, 40 | 20, 0, 40 | 20, 0, -70 | 20, 0, 50 |
| REFERENCE POSITION COORDINATE (B) | H1 | H1 | H1 | H1 |
| REFERENCE POSITION (Xb, Yb, Zb) | 30, 40, 42.5 | 50, 40, 82.5 | 70, 40, 12.5 | 90, 40, 62.5 |
| REFERENCE MODEL (C) | AAA. prt | - | BBB. prt | - |
| REFERENCE MODEL RELATIVE POSITION (Xc, Yc, Zc) | 0, 5, 2.5 | - | 10, 20, 12.5 | - |
| PRIORITY1 | C | A | C | B |
| PRIORITY2 | A | B | A | A |
| PRIORITY3 | B | - | B | - |
| FIXING OF PASSING DIRECTION | ON | OFF | OFF | ON |
| PASSING DIRECTION REFERENCE COORDINATES | AAA. prt | PASSING POINT NO. 01 | BBB. prt | H1 |
| PASSING DIRECTION RX | 1.0 | 1.0 | 1.0 | 0.7 |
| PASSING DIRECTION RY | 0 | 0 | 0 | 0 |
| PASSING DIRECTION RZ | 0 | 0 | 0 | 0.7 |
| BINDING POINT | ON | ON | ON | OFF |
| BINDING POINT NO. | 1 | 2 | 3 | - |
| BINDING POINT U VALUE | 2.5 | 2.5 | 2.5 | - |
| BINDING POINT V VALUE | 0.0 | 0.0 | 0.0 | - |

~ 2201 (BINDING POINT)
~ 2202 (BINDING POINT NO.)
} 2203 (BINDING POINT U VALUE / V VALUE)

F I G.  2 8

BINDING ROUTE-SECTION MANAGEMENT TABLE OF T001

| SECTION | 0 | 1 |
|---|---|---|
| STARTING POINT BINDING POINT | BINDING POINT 0 | BINDING POINT 1 |
| ENDING POINT BINDING POINT | BINDING POINT 1 | BINDING POINT 2 |

F I G. 2 9

SECTION MANAGEMENT TABLE OF HNS001

FIG. 30A

| SECTION | 0 | 1 | 2 | 3 | 4 |
|---|---|---|---|---|---|
| STARTING POINT PASSING | PASSING POINT-0 | PASSING POINT-1 | PASSING POINT-2 | PASSING POINT-3 | PASSING POINT-4 |
| BINDING SECTION | - | T001-0 | T001-1 | - | - |

SECTION MANAGEMENT TABLE OF HNS002

FIG. 30B

| SECTION | 0 | 1 | 2 | | |
|---|---|---|---|---|---|
| STARTING POINT PASSING | PASSING POINT-0 | PASSING POINT-1 | PASSING POINT-2 | | |
| BINDING SECTION | T001-0 | T001-1 | | | |

F I G. 3 1

START

MOVE THE BINDING POINT OF EXISTING HARNESS — S2601

UPDATE THE POSITION OF THE BINDING POINT. — S2602

SET THE HARNESS POSITION FROM THE BINDING POINT IN UV VALUES AS THE PASSING POINT POSITION AND UPDATE THE REFERENCE POSITION, THE RELATIVE POSITION AND THE LIKE, BASED ON THE UV VALUES AND THE BINDING POINT POSITION. — S2603

SELECT A SHAPE UPDATE PLACE. — S2604

S2605
BINDING SECTION? — Yes

No

FORM AN ORDINARY SECTION SHAPE. — S2606

FORM A BINDING SECTION SHAPE. — S2607

SUBSEQUENT SECTION? — S2608

Yes

No

END

F I G.  3 2

| BINDING POINT NO. | 0 | 1 | 2 |
|---|---|---|---|
| RELATIVE POSITION COORDINATE (A) | H1 | BINDING POINT NO. 0 | BINDING POINT NO. 01 |
| RELATIVE POSITION (Xa, Ya, Za) | 30, 40, 40 | 20, 0, 0 | 20, 0, -30 |
| REFERENCE POSITION COORDINATE (B) | H1 | H1 | H1 |
| REFERENCE POSITION (Xb, Yb, Zb) | 30, 40, 40 | 50, 40, 40 | 70, 40, 10 |
| REFERENCE MODEL (C) | AAA. prt | - | BBB. prt |
| REFERENCE MODEL RELATIVE POSITION (Xc, Yc, Zc) | 0, 5, 0 | - | 10, 20, 10 |
| PRIORITY1 | C | A | C |
| PRIORITY2 | A | B | A |
| PRIORITY3 | B | - | B |
| FIXING OF PASSING DIRECTION | ON | OFF | OFF |
| PASSING DIRECTION REFERENCE COORDINATES | AAA. prt | BINDING POINT 0 | BBB. prt |
| PASSING DIRECTION RX (VECTOR) | 1. 0 | 1. 0 | 1. 0 |
| PASSING DIRECTION RY (VECTOR) | 0 | 0 | 0 |
| PASSING DIRECTION RZ (VECTOR) | 0 | 0 | 0 |
| U DIRECTION RX (VECTOR) | 0 | 0 | 0 |
| U DIRECTION RY (VECTOR) | 0 | 0 | 0 |
| U DIRECTION RZ (VECTOR) | 1. 0 | 1. 0 | 1. 0 |
| V DIRECTION RX (VECTOR) | 0 | 0 | 0 |
| V DIRECTION RY (VECTOR) | 1. 0 | 1. 0 | 1. 0 |
| V DIRECTION RZ (VECTOR) | 0 | 0 | 0 |
| BELONGING HARNESS AND PASSING POINT NO. | Hns001 : 1<br>Hns002 : 0 | Hns001 : 2<br>Hns002 : 1 | Hns001 : 3<br>Hns002 : 2 |

F I G. 3 3

| PASSING POINT NO. | 1 | 2 | 3 | 4 |
|---|---|---|---|---|
| RELATIVE POSITION COORDINATE (A) | H1 | PASSING POINT NO. 01 | PASSING POINT NO. 02 | PASSING POINT NO. 03 |
| RELATIVE POSITION (Xa, Ya, Za) | 30, 40, 40 | 20, 0, 40 | 20, 0, -30 | 20, 0, 50 |
| REFERENCE POSITION COORDINATE (B) | H1 | H1 | H1 | H1 |
| REFERENCE POSITION (Xb, Yb, Zb) | 30, 40, 42.5 | 50, 40, 42.5 | 70, 40, 12.5 | 90, 40, 62.5 |
| REFERENCE MODEL (C) | AAA.prt | - | BBB.prt | - |
| REFERENCE MODEL RELATIVE POSITION (Xc, Yc, Zc) | 0, 5, 2.5 | - | 10, 20, 12.5 | - |
| PRIORITY1 | C | A | C | B |
| PRIORITY2 | A | B | A | A |
| PRIORITY3 | B | - | B | - |
| FIXING OF PASSING DIRECTION | ON | OFF | OFF | ON |
| PASSING DIRECTION REFERENCE COORDINATES | AAA.prt | PASSING POINT NO. 01 | BBB.prt | H1 |
| PASSING DIRECTION RX | 1.0 | 1.0 | 1.0 | 0.7 |
| PASSING DIRECTION RY | 0 | 0 | 0 | 0 |
| PASSING DIRECTION RZ | 0 | 0 | 0 | 0.7 |
| BINDING POINT | ON | ON | ON | OFF |
| BINDING POINT NO. | 1 | 2 | 3 | - |
| BINDING POINT U VALUE | 2.5 | 2.5 | 2.5 | - |
| BINDING POINT V VALUE | 0.0 | 0.0 | 0.0 | - |

# F I G.  3 4

CONNECTOR
(PASSING POINT 0)
ABC.prt

BINDING POINT 1

BINDING POINT 2

BINDING POINT 4

BINDING POINT 3

☐ : PASSING POINT WITH A REFERENCE MODEL

◯ : PASSING POINT IN THE REFERENCE POSITION

▲ : PASSING POINT IN THE RELATIVE POSITION

1602

1603

1601

Z

X

y

1606

AAA.prt

REFERENCE COORDINATE SYSTEM

1604

1605

1600

1607

BBB.prt

Hns002

Hns001

F I G. 3 5

START

SPECIFY THE NUMBER OF CONNECTION LINES. — S1502

SPECIFY A BONDING POINT. — S3001

GENERATE A BINDING POINT IN THE SPECIFIED BINDING POINT POSITION. — S3002

SET A HARNESS POSITION AT A BINDING POINT. — S1505

SET THE HARNESS POSITION FROM THE BINDING POINT IN UV VALUES AS THE PASSING POINT POSITION AND UPDATE THE REFERENCE POSITION, THE RELATIVE POSITION AND THE LIKE, BASED ON THE UV VALUES AND THE BINDING POINT POSITION. — S3003

Yes ← SUBSEQUENT BINDING POINT? — S1507

No

BINDING SECTION? — S1508    Yes →

No

GENERATE A BINDING POINT ROUTE. — S1509

SET A BINDING SECTION IN EACH PIECE OF HARNESS. — S1510

SELECT A SHAPE UPDATE PLACE. — S1511

BINDING SECTION? — S1512    Yes

No — S1513

FORM AN ORDINARY SECTION SHAPE.

FORM A BINDING SECTION SHAPE. — S1514

A SUBSEQUENT SECTION? — S1515

Yes

No

END

F I G.  3 6

START

SPECIFY EXISTING HARNESS. — S3101

SPECIFY A BINDING POINT WHICH BECOMES A COPY SOURCE IN THE HARNESS. — S3102

SPECIFY THE RANGE OF BINDING POINTS IN THE HARNESS. — S3103

S3104

THE BINDING PASSING POINT OF THE SAME HARNESS?

Yes

No

MATCH IT WITH THE COPY SOURCE. — S3105

S3106

SUBSEQUENT HARNESS?

Yes

No

S3107

A SUBSEQUENT BINDING POINT IN THE RANGE?

Yes

No

SELECT A SHAPE UPDATE PLACE. — S1511

S1512

BINDING SECTION?

Yes

No

FORM AN ORDINARY SECTION SHAPE. — S1513

FORM A BINDING SECTION SHAPE. — S1514

S1515

A SUBSEQUENT SECTION?

Yes

No

END

F I G. 3 7

F I G. 3 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2943711 B
- JP H8331734 B
- JP 3562678 B
- JP 2006319596 W
- JP 2007050189 W
- JP 2007050187 W
- JP 2007000695 W